# EUROPEAN PATENT APPLICATION

(11) **EP 4 435 945 A1**
(43) Date of publication of application: **25.09.2024**
(21) Application number: 22946088.6
(22) Date of filing: 13.06.2022
(51) Int. Cl.: H01M 50/20, B60K 1/04

(54) **BATTERY PACK AND ELECTRICAL DEVICE**

(71) Applicant: Contemporary Amperex Technology Co., Limited, Ningde, Fujian 352100 (CN)
(72) Inventor: SUN, Zhanyu, Ningde, Fujian 352100 (CN); CHEN, Xingdi, Ningde, Fujian 352100 (CN); WANG, Peng, Ningde, Fujian 352100 (CN)
(74) Representative: Jacob, Reuben Ellis
(86) International application number: PCT/CN2022/098343
(87) International publication number: WO 2023/240387

(57) **Abstract**

The present application relates to a battery pack (100) and an electrical device, comprising a box body (10) and battery cells (20). The box body (10) defines an accommodating cavity (s), and the battery cells (20) are accommodated in the accommodating cavity (s); the box body (10) comprises a bearing member (11a); the battery cells (20) are provided on the surface of the bearing member (11a); the minimum thickness H of the bearing member (11a) and the weight M of the battery pack (100) satisfy: 0.0002 mm/kg.

## Description

### TECHNICAL FIELD

This application relates to the field of battery technologies, and in particular, to a battery pack and an electrical device.

### BACKGROUND

With the increasing maturity of new energy technologies, new energy vehicles have gradually attracted the attention of people. The main core technology of new energy vehicles lies in the battery pack, and the safety and stability of the battery pack directly determine the performance of the vehicle.

A battery pack typically includes a box and a battery cell mounted inside the box. The box is configured to bear the weight of the battery cell. If the box cannot bear sufficient stress, safety accidents such as explosion and fire are likely to occur due to low strength of the battery pack.

### SUMMARY

In view of this, this application provides a battery pack and an electric apparatus.

According to a first aspect, this application provides a battery pack including a box and a battery cell. The box encloses an accommodating cavity, and the battery cell is accommodated in the accommodating cavity, where the box includes a bearing member, the battery cell is disposed on a surface of the bearing member, and a minimum thickness H of the bearing member and a weight M of the battery pack satisfy 0.0002 mm/kg < H/M ≤ 0.2 mm/kg.

In a technical solution of this application, the bearing member is configured to bear the weight of the battery cell. When the thickness H of the bearing member and the weight M of the battery pack satisfy a condition of 0.0002 mm/kg < H/M ≤ 0.2 mm/kg, the battery pack has good structural strength and avoids the problem of fire and explosion; and in addition, the battery pack has high energy density and the battery pack has higher endurance.

In some embodiments, the minimum thickness H of the bearing member satisfies 0.2 mm < H < 20 mm. In this case, the bearing member has good structural strength, the battery pack has good overall strength, and the battery pack is less likely to have fire and explosion. In addition, the bearing member occupies a small overall volume of the battery pack, resulting in high space utilization of the battery pack and high energy density of the battery pack.

In some embodiments, the battery cell is suspended under the bearing member. In this case, the battery cell is suspended below the bearing member, and the bottom cover is located at the bottom of the box. When maintenance is to be performed in the battery pack, the battery cell can be exposed by just dismounting the bottom cover without dismounting the bearing member. In addition, when the battery pack is to be maintained, the battery cell can be dismounted from below the bearing member. Especially, when the bearing member is stressed as at least a part of the chassis of the vehicle, the battery cell is dismounted from below the bearing member, and the bearing member does not need to be dismounted, allowing for easy maintenance of the battery pack.

In some embodiments, an outer surface of the battery cell facing the bearing member is a first outer surface; the battery cell includes an electrode terminal; and the electrode terminal is arranged on an outer surface other than the first outer surface of the battery cell. In this case, the electrode terminal is located on the outer surface other than the first outer surface of the battery cell, so that various components (such as a sampling wiring harness, a high-voltage wiring harness, and a protective structure) connected to the electrode terminal can be arranged in the space between the battery cell and the bottom cover and/or the space between the battery cell and an inner side surface of the body, allowing for easier arrangement of the components. Moreover, in this case, the first outer surface with no electrode terminal is connected to the bearing member, such that the battery cell can abut against the bearing member, saving the space between the battery cell and the bearing member and improving space utilization of the battery pack.

In some embodiments, the battery cell has a second outer surface facing away from the first outer surface, and the electrode terminal is disposed on the second outer surface. In this case, a buffer space is present between the second outer surface and the bottom cover, and a portion of the electrode terminal protruding out of the battery cell is located in the buffer space, such that the wiring harnesses and a connecting plate connected to the electrode terminal can be disposed in the buffer space. In addition, the buffer space can stop the external force impacting the bottom cover from acting on the battery cell and damaging the battery cell. Therefore, the buffer space can not only prevent effects of the external force but also allows for easy arrangement of the wiring harnesses and the like, achieving double benefits.

In some embodiments, the battery cell is adhered to the bearing member. In this case, the battery cell and the bearing member are connected conveniently, and the structure of the battery pack can be simplified.

In some embodiments of this application, the bearing member is located at the top of the box and is configured to define the accommodating cavity. In this case, the bearing member is a structure at the top of the box, so that the box can be mounted to the mounting body via the bearing member. The battery cell disposed on the bearing member can enhance the strength of the bearing member, thereby enhancing rigidity of the top of the battery pack.

In some embodiments, the bearing member includes a bearing portion and a connection portion. The connection portion is connected to an edge of the bearing portion in an enclosing manner, the bearing portion is configured to define the accommodating cavity, the connection portion is connected to a portion other than the bearing member of the box, and the battery cell is disposed at the bearing portion. In this case, the bearing member defines the accommodating cavity via the bearing portion and is connected to a structure other than the bearing member of the body via the connection portion, achieving a clear structure.

In some embodiments, the bearing portion protrudes in a direction away from the accommodating cavity with respect to the connection portion. When the bearing portion protrudes in a direction away from the accommodating cavity with respect to the connection portion, the bearing portion can serve as a reinforcing structure of the bearing member to enhance bending strength of the bearing member.

In some embodiments, the bearing portion and the connection portion have a same thickness. In this case, more convenient formation of the bearing member is implemented.

In some embodiments, the box further includes a bottom cover located at the bottom thereof. The bottom cover is configured to define the accommodating cavity. The bottom cover and the battery cell are spaced apart. In this case, an external force acting on the bottom cover can be prevented from being transmitted to the battery cell and damaging the battery cell. Especially when the battery pack is mounted at the bottom of a vehicle and the bottom cover is located at a lowest position of the battery pack, stone and the like on the ground are likely to fly to the bottom of the battery pack and impact the bottom cover while the vehicle is running, and in this case a buffer space can stop the external force from being transmitted to the battery cell and affecting the battery cell.

In some embodiments, the box further includes a frame and a bottom cover. The frame encloses a cavity with two ends that are through in a vertical direction; the bottom cover and the bearing member respectively cover two opposite ends of the cavity in the vertical direction; and the bottom cover, the frame, and the bearing member jointly enclose the accommodating cavity. In this case, on the basis of the frame, the bearing member and the bottom cover are respectively connected to the two ends of the frame in the vertical direction to form the accommodating cavity of the battery pack, achieving a simple structure of the box.

In some embodiments, the bearing member and the frame are fixedly connected or integrally formed. When the bearing member and the frame are integrally formed, the body is integrally formed, and the body can be connected to the bottom cover to implement assembly of the box, achieving convenient assembly of the box. When the bearing member and the frame are fixedly connected, the bearing member and the frame are formed using a simple process, reducing process cost of the box.

According to a second aspect, this application further provides an electric apparatus including the battery pack, where the battery pack is configured to supply electric energy to the electric apparatus.

In some embodiments, the electric apparatus includes a vehicle, and the battery pack is disposed at the bottom of a vehicle body of the vehicle. In this case, the battery pack is disposed at the bottom of the vehicle body without occupying internal space of the vehicle body, helping to reduce volume and weight of the vehicle body.

In some embodiments, the bearing member is located at the top of the box. In the vertical direction, a distance L from the bearing member to the vehicle body satisfies L ≥ 0. In this case, when the distance L from the bearing member to the vehicle body is equal to zero, the battery pack can have a large electric quantity and high energy density, and the vehicle has high endurance. When the distance L from the bearing member to the vehicle body is greater than zero, the bearing member is mounted more flexibly.

In some embodiments, the body includes a bearing member located at the top of the box; the bearing member is configured to define the accommodating cavity; and the battery pack is mounted to the vehicle body via the bearing member. When the battery cell is disposed at the bearing member, a structure formed by the battery cell and the bearing member is connected to the vehicle body, enhancing the strength of the top of the battery pack, thereby enhancing the mounting strength of the battery pack.

In some embodiments, the bearing member is configured to constitute at least a part of a chassis of the vehicle body. In this case, space occupied by a gap between a traditional chassis and the battery pack can be provided inside the battery pack to increase the space of the battery pack, helping to increase energy of the battery pack, thereby improving endurance of the vehicle.

Details of one or more embodiments of this application are provided in the accompanying drawings and description below. Other features, purposes, and advantages of this application will become apparent from the specification, the accompanying drawings, and the claims.

### BRIEF DESCRIPTION OF DRAWINGS

Persons of ordinary skill in the art can clearly understand various other advantages and benefits by reading the detailed description of the preferred embodiments below. The accompanying drawings are merely intended to illustrate the preferred embodiments and are not construed as a limitation on this application. Moreover, throughout the accompanying drawings, same parts are denoted by reference signs. In the accompanying drawings:
FIG. 1 is a schematic structural diagram of a vehicle according to some embodiments of this application;
FIG. 2 is a schematic structural diagram of a battery cell according to some embodiments of this application;
FIG. 3 is a schematic structural diagram of a battery pack according to some embodiments of this application;
FIG. 4 is a structural exploded view of the battery pack shown in FIG. 3;
FIG. 5 is a schematic structural diagram of a bottom cover according to some embodiments of this application;
FIG. 6 is a top view of the bottom cover shown in FIG. 5;
FIG. 7 is a front view of the bottom cover shown in FIG. 5;
FIG. 8 is a schematic structural diagram of a bottom cover according to some other embodiments of this application;
FIG. 9 is a cross-sectional view of the battery pack shown in FIG. 4;
FIG. 10 is a schematic diagram of a front projection of the bottom cover shown in FIG. 6 in a vertical direction;
FIG. 11 is a schematic diagram of appearance of a battery cell according to some embodiments of this application;
FIG. 12 is a front view of the battery cell shown in FIG. 11;
FIG. 13 is a schematic structural diagram of a bearing member according to some embodiments of this application;
FIG. 14 is a schematic structural diagram of a bearing member according to some other embodiments of this application;
FIG. 15 is a front projection view of the bearing member shown in FIG. 14 in a vertical direction;
FIG. 16 is a front view of the battery pack shown in FIG. 4;
FIG. 17 is a schematic diagram of application of a battery pack according to some embodiments of this application to a vehicle body;
FIG. 18 is a first disassembled state view of the structure shown in FIG. 17;
FIG. 19 is a second disassembled state view of the structure shown in FIG. 17; and
FIG. 20 is a schematic diagram of a mounting relationship between a battery pack and a vehicle body according to some embodiments of this application.

1000. vehicle; 100. battery pack; 200. vehicle body; 10. box; 11. body; 11a. bearing member; 11a1. bearing portion; 11a2. connection portion; 11b. frame; 12. bottom cover; 12a. cover portion; 12b. mounting portion; 12c. fixing hole; 13. fastener; s. accommodating cavity; q. cavity; f. bearing surface; f1. first bearing side; f2. second bearing side; f3. third bearing side; f4. fourth bearing side; d. characteristic surface; d1. first characteristic side; d2. second characteristic side; d3. third characteristic side; d4. fourth characteristic side; 20. battery cell; 21. end cover; 21a. electrode terminal; 22. housing; 23. electrode assembly; m1. first outer surface; m2. second outer surface; and m3. third outer surface.

### DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples which do not constitute any limitation on the protection scope of this application.

Unless otherwise defined, all technical and scientific terms used herein shall have the same meanings as commonly understood by persons skilled in the art to which this application relates. The terms used herein are intended to merely describe the specific embodiments rather than to limit this application. The terms "include", "comprise", and any other variations thereof in the specification, claims and brief description of drawings of this application are intended to cover non-exclusive inclusions.

In the description of the embodiments of this application, the terms "first", "second" and the like are merely intended to distinguish between different objects, and shall not be understood as any indication or implication of relative importance or any implicit indication of the number, sequence or primary-secondary relationship of the technical features indicated. In the description of the embodiments of this application, "a plurality of" means at least two unless otherwise specifically stated.

In this specification, reference to "embodiment" means that specific features, structures or characteristics described with reference to the embodiment may be incorporated in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as any limitation on embodiments of this application.

In the description of the embodiments of this application, unless otherwise specified and defined explicitly, the terms "mount", "connect", "join", and "fasten" should be understood in their general senses. For example, they may refer to a fixed connection, a detachable connection, or an integral connection, may refer to a mechanical connection or electrical connection, and may refer to a direct connection, an indirect connection via an intermediate medium, or an interaction between two elements. Persons of ordinary skill in the art can understand specific meanings of these terms in the embodiments of this application as appropriate to specific situations.

Currently, from the perspective of market development, application of battery packs is becoming more and more extensive. Traction battery packs have been widely used in not only energy storage power supply systems such as hydroelectric, thermal, wind, and solar power plants, but also other fields including electric transportation tools such as electric bicycles, electric motorcycles and electric vehicles, military equipment, and aerospace. With the continuous expansion of application fields of battery packs, market demands for the battery packs are also expanding.

The inventors have noted that the battery cell in the battery pack is supported on the box of the battery pack; and if the box cannot bear sufficient stress, the battery pack has insufficient structural strength, and it is likely to cause safety accidents such as fire and explosion.

In order to improve the safety and service life of the battery pack, the inventors have found through research that a relationship between a thickness of a component in the box for bearing the weight of the battery and the weight of the battery pack is reasonably designed to ensure sufficient structural strength of the battery pack.

In view of the above considerations, in order to improve the safety and service life of the battery pack, the inventors have designed a battery pack through in-depth research. The battery pack includes a box and a battery cell. The box encloses an accommodating cavity, and the battery cell is accommodated in the accommodating cavity, where the box includes a bearing member, the battery cell is disposed at a surface of the bearing member, and a minimum thickness H of the bearing member and a weight M of the battery pack satisfy 0.0002 mm/kg < H/M ≤ 0.2 mm/kg. In this case, the bearing member is configured to bear the weight of the battery cell. When the thickness H of the bearing member and the weight M of the battery pack satisfy a condition of 0.0002 mm/kg < H/M ≤ 0.2 mm/kg, the battery pack has good structural strength and avoids the problem of fire and explosion; and in addition, the battery pack has high energy density and the battery pack has higher endurance.

The battery pack disclosed in the embodiments of this application may be used in but not limited to electric apparatuses such as vehicles, ships, or aircrafts. The battery pack disclosed in this application may be used to constitute a power supply system of the electric apparatus. The mounting body involved in this application is a structure for mounting the battery pack in the electric apparatus.

An embodiment of this application provides an electric apparatus that uses a battery pack as a power source. The electric apparatus may be but is not limited to a mobile phone, a tablet, a laptop computer, an electric toy, an electric tool, an electric bicycle, an electric car, a ship, or a spacecraft. The electric toy may include a fixed or mobile electric toy, for example, a game console, an electric toy car, an electric toy ship, and an electric toy aircraft. The spacecraft may include an aircraft, a rocket, a space shuttle, and a spaceship.

For ease of description, an electric apparatus according to an embodiment of this application being a vehicle 1000 is used as an example for description of the following embodiments.

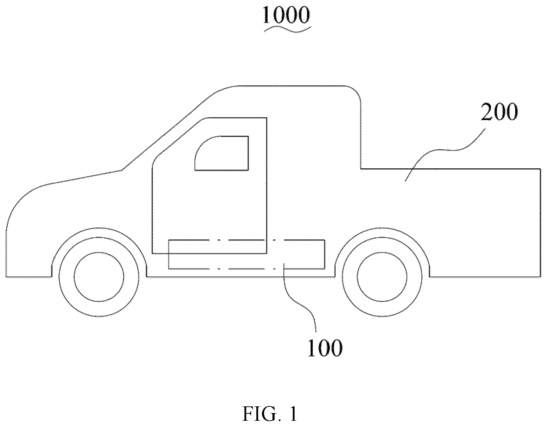

Refer to FIG. 1. FIG. 1 is a schematic structural diagram of a vehicle 1000 according to some embodiments of this application. The vehicle 1000 may be a fossil fuel vehicle, a natural-gas vehicle, or a new energy vehicle, where the new energy vehicle may be a battery electric vehicle, a hybrid electric vehicle, a range-extended vehicle, or the like. The vehicle 1000 is provided with a battery pack 100 inside, and the battery pack 100 may be disposed at the bottom, front, or rear of the vehicle 1000. The battery pack 100 may be configured to power the vehicle 1000. For example, the battery pack 100 may be used as an operational power source for the vehicle 1000. The vehicle 1000 may further include a controller and a motor. The controller is configured to control the battery pack 100 to supply power to the motor, for example, to meet power needs of start, navigation, and driving of the vehicle 1000.

In some embodiments of this application, the battery pack 100 can be used as not only the operational power source for the vehicle 1000 but also a driving power source for the vehicle 1000, replacing or partially replacing fossil fuel or natural gas to provide driving traction for the vehicle 1000.

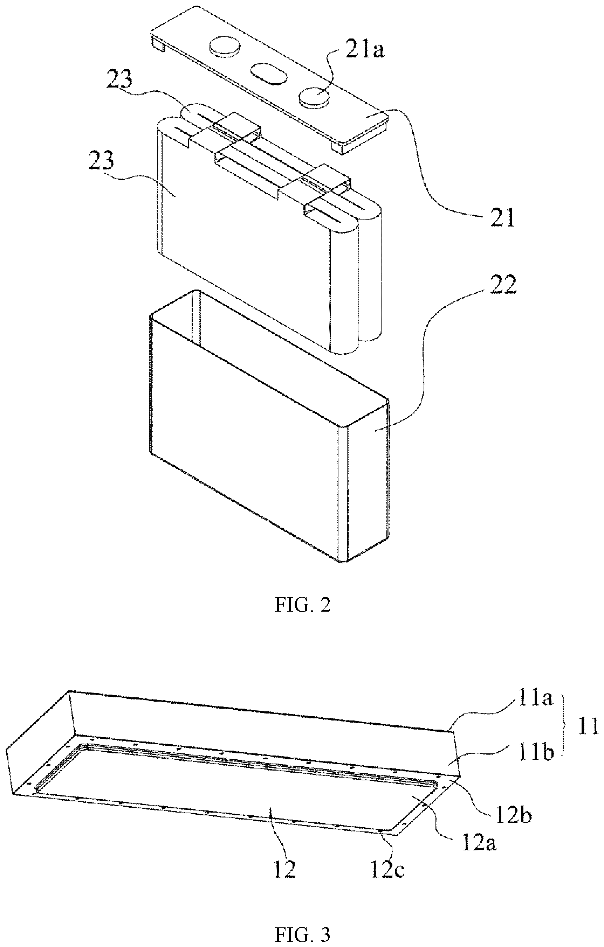

Refer to FIG. 2. FIG. 2 is a schematic structural diagram of a vehicle 1000 according to some embodiments of this application. The battery cell 20 refers to a smallest element constituting the battery pack 100. As shown in FIG. 2, the battery cell 20 includes an end cover 21, a housing 22, an electrode assembly 23, and other functional components.

The end cover 21 refers to a component that covers an opening of the housing 22 to isolate internal environment of the battery cell 20 from external environment. Without limitation, the end cover 21 may adapt to the housing 22 in shape so as to fit the housing 22. Optionally, the end cover 21 may be made of a material with given hardness and strength (for example, aluminum alloy), so that the end cover 21 is less likely to deform when subjected to extrusion and collision, enabling the battery cell 20 to have higher structural strength and enhanced safety performance. The end cover 21 may be provided with functional components such as an electrode terminal 21a. The electrode terminal 21a may be configured to be electrically connected to the electrode assembly 23 for outputting or inputting electrical energy of the battery cell 20. In some embodiments, the end cover 21 may also be provided with a pressure relief mechanism configured to relieve internal pressure when the internal pressure or temperature in the battery cell 20 reaches a threshold. The end cover 21 may also be made of various materials such as copper, iron, aluminum, stainless steel, aluminum alloy, and plastic, which are not particularly limited in the embodiments of this application. In some embodiments, an insulator may also be disposed on an inner side of the end cover 21. The insulator can be configured to isolate electrical connection portions 11a2 in the housing 22 from the end cover 21, reducing a risk of short circuit. For example, the insulator may be plastic, rubber, or the like.

The housing 22 is a component fitting with the end cover 21 to form an internal environment of the battery cell 20, where the internal environment formed may be configured to accommodate the electrode assembly 23, an electrolyte, and other components. The housing 22 and the end cover 21 may be independent components, and an opening may be provided in the housing 22, so that the end cover 21 can close the opening to form the internal environment of the battery cell 20. Without limitation, the end cover 21 and the housing 22 may also be integrated. Specifically, the end cover 21 and the housing 22 may form a shared connection surface before other components are disposed inside the housing, then the end cover 21 covers the housing 22 when inside of the housing 22 needs to be enclosed. The housing 22 may be of various shapes and sizes, for example, a rectangular shape, a cylindrical shape, and a hexagonal prism shape. Specifically, the shape of the housing 22 may be determined based on a specific shape and size of the electrode assembly 23. The housing 22 may be made of various materials such as copper, iron, aluminum, stainless steel, aluminum alloy, and plastic, which are not particularly limited in the embodiments of this disclosure.

The electrode assembly 23 is a component in which electrochemical reactions take place in the battery cell 20. The housing 22 may include one or more electrode assemblies 23. The electrode assembly 23 is mainly formed by winding or stacking a positive electrode plate and a negative electrode plate, and typically a separator is provided between the positive electrode plate and the negative electrode plate. Portions of the positive electrode plate and negative electrode plate with active substances constitute a body 11 of the electrode assembly 23, while portions of the positive electrode plate and negative electrode plate without active substances each constitute a tab. The positive electrode tab and the negative electrode tab may both be located at one end of the body 11 or be located at two ends of the body 11 respectively. During charge and discharge of the battery, a positive electrode active substance and a negative electrode active substance react with an electrolyte, and the tabs are connected to electrode terminals 21a to form a current loop.

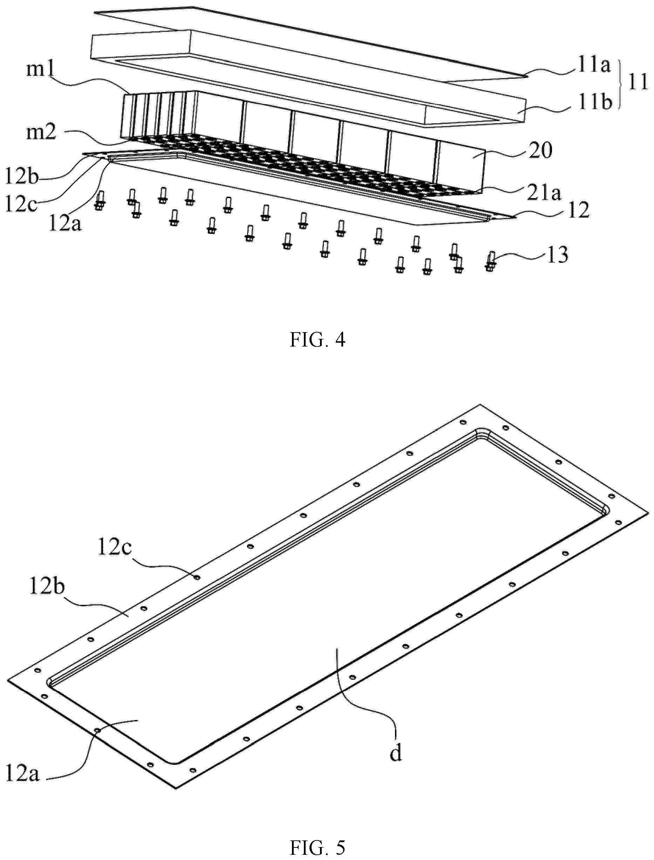

FIG. 3 is a schematic structural diagram of a battery pack 100 according to some embodiments of this application. FIG. 4 is a structural exploded view of the battery pack 100 shown in FIG. 3. According to some embodiments of this application, referring to FIG. 3 and FIG. 4, these embodiments provide a battery pack 100 including a battery cell 20 and a box 10, where the box 10 is provided with an accommodating cavity s, and the battery cell 20 is accommodated in the accommodating cavity s.

In the battery pack 100, a plurality of battery cells 20 may be provided, and the plurality of battery cells 20 may be connected in series, parallel, or series-parallel, where being connected in series-parallel means a combination of series and parallel connections of the plurality of battery cells 20. The plurality of battery cells 20 may be directly connected in series, parallel, or series-parallel, and then an entirety of the plurality of battery cells 20 is accommodated in the box 10; or certainly, the battery pack 100 may be formed by a plurality of battery cells 20 connected in series, parallel, or series-parallel first to form a battery module and then a plurality of battery modules are connected in series, parallel, or series-parallel to form an entirety which is accommodated in the box 10. The battery pack 100 may further include other structures. For example, the battery pack 100 may further include a busbar configured to implement electrical connection between the plurality of battery cells 20. Each battery cell 20 may be a secondary battery or a primary battery, and may be a lithium-sulfur battery, a sodium-ion battery, or a magnesium-ion battery, without being limited thereto. The battery cell 20 may be cylindrical, flat, cuboid, or of other shapes.

The box 10 may be of various shapes, such as a cylindrical shape or a cuboid shape. The box 10 may be specifically structured in various manners.

In some embodiments, still referring to FIG. 3 and FIG. 4, the box 10 includes a body 11 and a bottom cover 12 detachably connected to the bottom of the body 11. The bottom cover 12 and the body 11 enclose an accommodating cavity s for accommodating the battery cell 20.

The body 11 may be an integrally formed structure or may be formed by assembling a plurality of components. The body 11 may be a hollow housing 22 structure that defines a first space. The first space has an opening in the bottom, and the bottom cover 12 covers the opening of the first space. The bottom cover 12 may be a hollow structure having an opening in a side and may include a second space. The second space of the bottom cover 12 and the first space of the body 11 jointly form the accommodating cavity s. The bottom cover 12 may have no space for forming the accommodating cavity s. When the bottom cover 12 covers the opening of the first space of the body 11, and the bottom cover 12 closes the first space of the body 11 and they enclose the accommodating cavity s identical to the first space. In this case, the bottom cover 12 may be a flat plate structure. Certainly, the accommodating cavity s of the box 10 may alternatively be formed by a portion of the first space of the body 11. In this case, the bottom cover 12 covers the opening of the first space, recesses towards the first space, and occupies a part of the first space. All other parts of the first space except the part occupied by the bottom cover 12 form the accommodating cavity s of the box 10.

Understandably, in this case, the bottom cover 12 is located at the bottom of the box 10 and is configured to define the accommodating cavity s together with the body 11. Specifically, the bottom cover 12 may be but is not limited to a plate structure and a block structure, and may be a flat plate, a bent plate, or the like, which is not specifically limited.

When the battery cell 20 is located in the accommodating cavity s, the battery cell 20 may be disposed on the bottom cover 12 and/or the body 11.

When the body 11 is formed by assembling a plurality of components, the battery cell 20 may be disposed on one of the components or may be disposed on all of the components. In an embodiment, the body 11 may include a top cover (not shown in the figure), an enclosing plate (not shown in the figure), and a supporting plate (not shown in the figure). The enclosing plate encloses a third space with an opening on each of two ends in a vertical direction. The top cover and the bottom cover 12 hermetically cover the two ends of the third space in the vertical direction, respectively. The top cover, the enclosing plate, and the bottom cover 12 jointly enclose the accommodating cavity s. The supporting plate is located in the third space, and the battery cell 20 is supported on the supporting plate. In other embodiments, the body 11 may include a bearing member 11a and a frame 11b described below. Details are shown in the following description.

The bottom cover 12 and the body 11 may be fixed by welding, hot melting, adhesion, fastening, clamping, and the like. Fastening means that a fastener 13 is used for connection. The fastener 13 includes components such as a bolt, a latch, a rivet, a pin, and a screw. Clamping means that a clamping structure is used for fixation. For example, a clamping hook is provided on the bottom cover 12, a clamping opening is formed in the body 11, and the bottom cover 12 and the body 11 are clamped for fixation when the clamping hook is clamped in the clamping opening. Certainly, the connection manner between the bottom cover 12 and the body 11 is not limited thereto, which is not exhaustively described in this application.

In some embodiments, the bottom cover 12 and the body 11 are hermetically connected and jointly form a closed accommodating cavity s.

The bottom cover 12 and the body 11 are hermetically connected in various manners. The connection manner may be but is not limited to: a sealing member is provided between the bottom cover 12 and the body 11, and the bottom cover 12 and the body 11 are hermetically connected via the sealing member; the bottom cover 12 and the body 11 are hermetically connected via a sealing adhesive; and the bottom cover 12 and the body 11 are plug-connected and hermetically connected via a barrier structure formed by plug-connection surfaces.

In this case, the bottom cover 12 and the body 11 of the box 10 of the battery pack 100 enclose a sealed accommodating cavity s, without provision of additional sealing structures in the box 10, so that the structure of the battery pack 100 can be simplified, the cost of the battery pack 100 is reduced, and the safety and service life of the battery pack 100 are ensured.

In the description of this application, the bottom cover 12 of the battery pack 100 is located at the bottom of the body 11. To be specific, the bottom cover 12 is located at the bottom of the body 11 in an up-down direction shown in FIG. 3 and FIG. 4. In actual use, the up-down direction shown in FIG. 3 and FIG. 4 may be but is not limited to the vertical direction, which is determined according to an actual mounting condition of the battery pack 100. It should be noted that in the following description of this application, the vertical direction is used as a reference for describing the position relationship, size and the like of each structure of the battery pack 100, but this is not construed as a limitation on a use manner of the battery pack 100, and is merely for clearer description and explanation of solutions.

In some embodiments, the bottom cover 12 and the body 11 are hermetically connected via a sealing member.

The sealing member refers to a component capable of preventing a fluid, solid particles, or the like from leaking out between adjacent joint surfaces, as well as preventing external impurities such as dust and moisture from intruding into the battery pack 100. That the body 11 and the bottom cover 12 are hermetically connected via the sealing member means that the sealing member is connected between two opposite surfaces of the body 11 and the bottom cover 12, and a ring-shaped contact interface is present between the sealing member and the two surfaces, preventing external moisture from entering the battery pack 100 via the contact interface between the sealing member and the two surfaces, thereby achieving a sealing effect.

The sealing member is optionally a sealing ring or a sealing gasket. Specifically, the sealing member is optionally made of a material such as rubber or silicone. Specifically, the sealing member is optionally an O-shaped sealing member, a square sealing member, an irregularly-shaped sealing member, or the like. The specific shape of the sealing member may fit the shapes of the two opposite surfaces of the bottom cover 12 and the body 11. For example, when the two opposite surfaces of the bottom cover 12 and the body 11 are annular surfaces, the sealing member may be an O-shaped sealing member.

In this case, the bottom cover 12 and the body 11 are hermetically connected via the sealing member, achieving reliable sealing with low cost.

It should be noted that after the bottom cover 12 and the body 11 are sealed via the sealing member, the bottom cover 12 and the body 11 may be fixedly connected in another manner. The another manner includes but is not limited to clamping, plug connection, connection via a threaded member, riveting, welding, and adhesion. Understandably, when the bottom cover 12 and the body 11 are sealed via a sealing adhesive, based on adhesion of the sealing adhesive, the bottom cover 12 and the body 11 may not be fixedly connected in another manner if the adhesion of the sealing adhesive is good enough to meet requirements (that is, the bottom cover 12 and the body 11 are fixed and not separated).

In some embodiments, the bottom cover 12 is detachably connected to the bottom of the body 11.

The detachable connection between the bottom cover 12 and the body 11 means that when the bottom cover 12 and the body 11 are connected, with respect to the body 11, the bottom cover 12 has a first state in which the bottom cover 12 is completely connected to the body 11 and forms the accommodating cavity s as well as a second state in which the bottom cover 12 is incompletely connected to or separated from the body 11 to expose the battery cell 20. Under operation of an external force, the bottom cover 12 can switch from the first state to the second state and can also switch from the second state to the first state, without damaging any component in this process.

Under the condition that with respect to the body 11, the bottom cover 12 is in the second state in which the bottom cover 12 is incompletely connected to the body 11 and enables the accommodating cavity s to be opened, the bottom cover 12 and the body 11 may be mounted in the following manner: the bottom cover 12 and the body 11 are rotationally connected and can be fixedly connected via a fastener 13 or by clamping. When the bottom cover 12 rotates with respect to the body 11 until the accommodating cavity s is closed, the bottom cover 12 and the body 11 can be fixedly connected via a fastener 13 or by clamping, and the battery cell 20 is accommodated in the accommodating cavity s and unviewable. In this case, the bottom cover 12 is in the first state. When the fastener 13 is dismounted or unclamping is performed, the bottom cover 12 can rotate with respect to the body 11 to open the accommodating cavity s and expose the position of the battery cell 20. In this case, the bottom cover 12 is in the second state. The rotatable connection between the bottom cover 12 and the body 11 may be but is not limited to a rotatable connection between the bottom cover 12 and the body 11 via a rotating shaft.

When the bottom cover 12, with respect to the body 11, is in the second state in which the bottom cover 12 is separated from the body 11 and enables the accommodating cavity s to be opened, the bottom cover 12 and the body 11 are mounted in the following manner: the bottom cover 12 and the body 11 are fixedly connected via a fastener 13 or by clamping. When the fastener 13 is mounted to the bottom cover 12 and the body 11 or clamping structures of the bottom cover 12 and body 11 are clamped, the bottom cover 12 and the body 11 are entirely fixed and jointly form the accommodating cavity s, and the battery cell 20 is accommodated in the accommodating cavity s and unviewable. In this case, the bottom cover 12 is in the first state. When the fastener 13 is dismounted or unclamping is performed, the bottom cover 12 can be removed from the body 11 to expose the battery cell 20. In this case, the bottom cover 12 is in the second state.

In the first state, the bottom cover 12 forms the accommodating cavity s with the body 11 to protect the battery cell 20. When the bottom cover 12 is in the second state, the battery pack 100 body is exposed, allowing for easy maintenance or replacement for the battery cell 20 by related personnel.

In some embodiments, referring to FIG. 4, the bottom cover 12 and the body 11 are detachably connected via a fastener 13.

The fastener 13 refers to a component capable of fastening two or more parts (or components) as an entirety, which may be but is not limited to a screw, a bolt, a rivet, a latch, a pin shaft, and a welding stud.

In this case, the bottom cover 12 and the body 11 are detachably connected via the fastener 13, which not only allows for easy mounting and dismounting but also features simple structure and low cost.

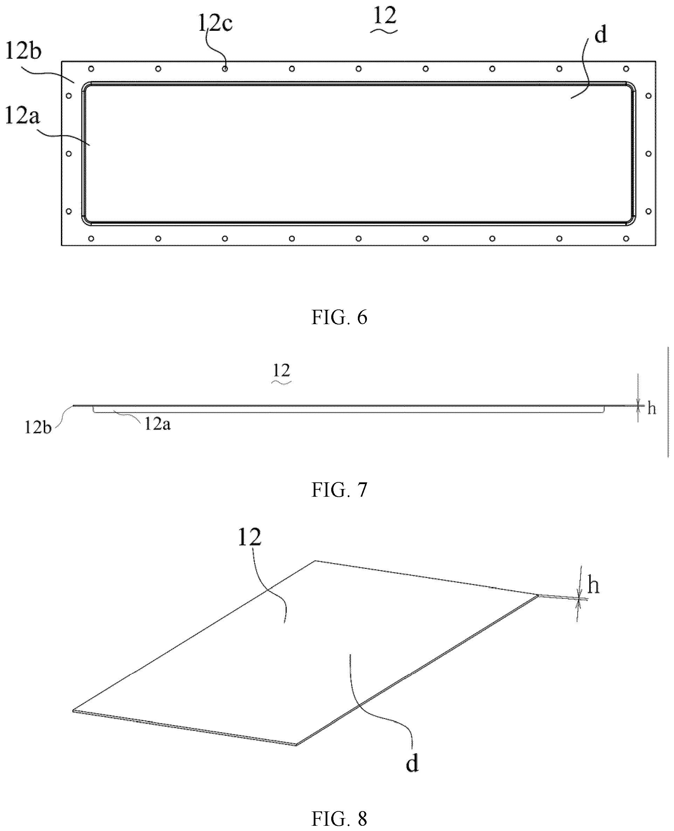

FIG. 5 is a schematic structural diagram of a bottom cover 12 according to some embodiments of this application. FIG. 6 is a top view of the bottom cover 12 shown in FIG. 5. FIG. 7 is a front view of the bottom cover 12 shown in FIG. 5. FIG. 8 is a schematic structural diagram of a bottom cover 12 according to some other embodiments of this application.

In some embodiments, a minimum thickness h of the bottom cover 12 satisfies 0.2 mm < h < 20 mm.

The thickness of the bottom cover 12 refers to a distance between two side surfaces of the bottom cover 12 in the vertical direction on a cross section in the vertical direction. The minimum thickness h of the bottom cover 12 is a shortest distance between the two side surfaces of the bottom cover 12 in the vertical direction. When the bottom cover 12 has a consistent thickness in each portion, the bottom cover 12 may be a flat plate (as shown in FIG. 8), and the minimum thickness of the bottom cover 12 is the identical thickness of the portions of the bottom cover 12. When the thickness of the bottom cover 12 is uneven, the minimum thickness of the bottom cover 12 is the thickness of the thinnest portion of the bottom cover 12.

Specifically, the minimum thickness h of the bottom cover 12 is optionally 0.3mm, 0.5mm, 0.8mm, 1mm, 1.5mm, 1.8mm, 2mm, 2.5mm, 2.8mm, 3mm, 3.5mm, 3.8mm, 4mm, 4.5mm, 4.7mm, 5mm, 5.5mm, 5.8mm, 6mm, 6.5mm, 7mm, 7.5mm, 8mm, 8.5mm, 9mm, 9.5mm, 10mm, 10.5mm, 11mm, 11.5mm, 12mm, 12.5mm, 13mm, 13.5mm, 14mm, 14.5mm, 15mm, 16mm, 16.5mm, 17mm, 17.5mm, 18mm, 18.5mm, 19mm, 19.5mm, or the like. Preferably, 0.5 mm ≤ h ≤ 3 mm.

It has been proved that when the minimum thickness h of the bottom cover 12 satisfies 0.2 mm < h < 20 mm, the weight of the battery pack 100 can be effectively reduced with a reasonable strength and structure maintained.

It should be noted that in the description of this application, based on the vertical direction as a reference, "thickness" of a structure refers to a distance between two side surfaces of this structure in the vertical direction on a cross section in the vertical direction. The "thickness" is not explained too much in the following description, and reference can be made to the description herein. Certainly, understandably, the vertical direction is merely for describing the solutions of this application more conveniently and does not constitute a limitation on a user manner of the battery pack 100.

In some embodiments, a weight m of the battery cell 20 and a minimum wall thickness h of the bottom cover 12 satisfy 0.03 mm/Kg ≤ h/m ≤ 100 mm/Kg.

The weight m of the battery cell 20 refers to a weight m of a single battery cell 20. When the battery pack 100 includes a plurality of battery cells 20, the weight of the battery cells 20 refers to a weight of all the battery cells 20.

Specifically, a ratio of the minimum wall thickness h of the bottom cover 12 to the weight m of the battery cell 20 is optionally 0.04 mm/Kg, 0.05 mm/Kg, 0.1 mm/Kg, 0.4 mm/Kg, 0.8 mm/Kg, 1 mm/Kg, 1.5 mm/Kg, 2 mm/Kg, 2.5 mm/Kg, 3 mm/Kg, 3.5 mm/Kg, 4 mm/Kg, 5 mm/Kg, 6 mm/Kg, 8 mm/Kg, 10 mm/Kg, 12 mm/Kg, 13 mm/Kg, 15 mm/Kg, 16 mm/Kg, 18 mm/Kg, 20 mm/Kg, 30 mm/Kg, 35 mm/Kg, 40 mm/Kg, 45 mm/Kg, 50 mm/Kg, 55 mm/Kg, 60 mm/Kg, 65 mm/Kg, 68 mm/Kg, 70 mm/Kg, 75 mm/Kg, 80 mm/Kg, 85 mm/Kg, 90 mm/Kg, 95 mm/Kg, 98 mm/Kg, or the like.

**Table 1 Influence of ratio of minimum wall thickness h of bottom cover 12 to weight m of battery cell 20 on safety performance of battery pack 100**

| No. | h (mm) | m (Kg) | h/m (mm/Kg) | Test result |
|---|---|---|---|---|
| 1 | 0.2 | 10 | 0.02 | Fire and explosion occurred |
| 2 | 0.5 | 10 | 0.05 | No fire, no explosion |
| 3 | 1.2 | 3 | 0.4 | No fire, no explosion |
| 4 | 3 | 1 | 3 | No fire, no explosion |
| 5 | 5 | 1.5 | 3.33 | No fire, no explosion |
| 6 | 8 | 1.8 | 4.45 | No fire, no explosion |
| 7 | 10 | 2 | 5 | No fire, no explosion |
| 8 | 12 | 1.6 | 7.5 | No fire, no explosion |
| 9 | 15 | 1.7 | 8.82 | No fire, no explosion |
| 10 | 20 | 2 | 10 | No fire, no explosion |
| 11 | 20 | 1 | 20 | No fire, no explosion |
| 12 | 20 | 0.5 | 40 | No fire, no explosion |
| 13 | 20 | 0.32 | 62.5 | No fire, no explosion |
| 14 | 20 | 0.25 | 80 | No fire, no explosion |
| 15 | 20 | 0.2 | 100 | No fire, no explosion |

Table 1 shows test results of the influence of the ratio of the minimum wall thickness h of the bottom cover 12 to the weight m of the battery cell 20 on the safety performance of the battery pack 100, based on tests performed according to the standard of GB 38031-2020 Safety Requirements for Traction Batteries for Electric Vehicles. It can be learned from Table 1 that when h/m is equal to 0.02 mm/Kg, the battery pack 100 is likely to have fire and explosion, and this is because the structural strength of the battery pack 100 cannot meet the requirements. When h/m is greater than 0.02 mm/Kg, the bottom cover 12 has a sufficient structural strength, so the battery pack 100 is less likely to have fire and explosion. However, excessively large h/m is likely to cause waste of space and excessively low energy density. Therefore, h/m is preferably not greater than 100 mm/Kg.

It has been proved that when the minimum thickness h of the bottom cover 12 and the weight m of the battery cell 20 satisfy 0.03 mm/Kg ≤ h/m ≤ 100 mm/Kg, the battery pack 100 has not only good structural strength but also high energy density, making it less prone to fire and explosion.

In some embodiments, referring to FIG. 5 to FIG. 7, the bottom cover 12 includes a cover portion 12a and a mounting portion 12b. The mounting portion 12b is connected to an edge of the cover portion 12a in an enclosing manner, the cover portion 12a is configured to define the accommodating cavity s, and the mounting portion 12b is connected to the body 11.

That the cover portion 12a is configured to define the accommodating cavity s means that the cover portion 12a and the body 11 jointly enclose the accommodating cavity s, and the mounting portion 12b is connected to the body 11 without defining the accommodating cavity s. The cover portion 12a may be a plate-shaped or blocky component or may be a flat plate-shaped or bent plate-shaped component. This is not specifically limited. It can be seen from FIG. 6 that the mounting portion 12b enclosing the edge of the cover portion 12a means that the mounting portion 12b is continuously arranged along the edge of the cover portion 12a to form a structure with its head and tail in a closed connection. Understandably, in a projection in the vertical direction, the mounting portion 12b has a specified width so as to have an appropriate contact area with the body 11, allowing for easy positioning and mounting between the mounting portion 12b and the body 11, also allowing for easy arrangement of the sealing member, as well as helping to improve tightness between the mounting portion 12b and the body 11.

The cover portion 12a and the mounting portion 12b may be integrally formed. When the bottom cover 12 is made of a metal material (for example, aluminum, iron, or stainless steel), the cover portion 12a and the mounting portion 12b may be integrally formed by die casting, calcining, hot pressing, cold pressing, or the like. When the bottom cover 12 is made of a plastic material (for example, PP, PE, or ABS), the cover portion 12a and the mounting portion 12b may be integrally formed by injection molding. The cover portion 12a and the mounting portion 12b may alternatively be separately formed first and then connected together. When the cover portion 12a and the mounting portion 12b are made of a metal material, the cover portion 12a and the mounting portion 12b may be welded or adhered together. When the cover portion 12a and the mounting portion 12b are made of a plastic material, the cover portion 12a and the mounting portion 12b may be adhered together. Certainly, the cover portion 12a and the mounting portion 12b may alternatively be fixedly connected by other methods such as clamping or riveting.

The cover portion 12a and the mounting portion 12b may be located in a same plane. Specifically optionally, two surfaces of the cover portion 12a and the mounting portion 12b that both face the body 11 are located in a same plane, and/or two surfaces of the cover portion 12a and the mounting portion 12b that both face away from the body 11 are located in a same plane. When the two surfaces of the cover portion 12a and the mounting portion 12b that both face the body 11 are located in a same plane and the two surfaces that both face away from the body 11 are located in a same plane, the cover portion 12a and the mounting portion 12b can form a flat plate-shaped bottom cover 12 (as shown in FIG. 8).

The cover portion 12a and the mounting portion 12b may alternatively not be located in a same plane. Specifically, the cover portion 12a recesses towards the body 11 with respect to the mounting portion 12b or the cover portion 12a protrudes away from the body 11 with respect to the mounting portion 12b. This is not specifically limited. The cover portion 12a and the mounting portion 12b may be equal or unequal in thickness, which is not specifically limited.

In this case, the bottom cover 12 defines the accommodating cavity s via the cover portion 12a and is connected to the body 11 via the mounting portion 12b, achieving a clear structure and convenient mounting.

Understandably, when the bottom cover 12 and the body 11 are hermetically connected, the bottom cover 12 is hermetically connected to the body 11 via the mounting portion 12b, that is, the mounting portion 12b is hermetically connected to the body 11. The mounting portion 12b and the body 11 may be hermetically connected via a sealing member, hermetically connected via a sealing adhesive, or the like. Details are not exhaustively described. The sealing member may be the sealing member mentioned in the foregoing description. An arrangement manner of the sealing member can refer to the foregoing description except that the sealing member is arranged between the mounting portion 12b and the body 11. When the mounting portion 12b and the body 11 are hermetically connected via a sealing adhesive, the sealing adhesive may be applied on an entire surface where the mounting portion 12b is in contact with the body 11.

Understandably, when the bottom cover 12 and the body 11 are detachably connected, the bottom cover 12 is detachably connected to the body 11 via the mounting portion 12b, that is, the mounting portion 12b is detachably connected to the body 11. For the detachable connection manner between the mounting portion 12b and the body 11, reference may be made to the detachable manner between the bottom cover 12 and the body 11 described in the foregoing description, except that a position in the bottom cover 12 that is detachably connected to the body 11 is configured as the mounting portion 12b. Therefore, the detachable connection manner between the mounting portion 12b and the body 11 is not described in detail herein.

In some embodiments, the mounting portion 12b and the body 11 are detachably connected.

Specifically, the bottom cover 12 further includes a fixing hole 12c provided in the mounting portion 12b, and the fastener 13 is fastened to the body 11 after running through the fixing hole 12c in the mounting portion 12b. The fixing hole 12c is a through hole running through the mounting portion 12b in the vertical direction. Specifically, the fixing hole 12c may be a smooth through hole (for example, when the fastener 13 is a rivet), or a through hole with screw threads (for example, when the fastener 13 is a screw), or a through hole in another form (for example, a hexagonal hole, a square hole, or a waist-type hole). A specific form of the fixing hole 12c is determined according to a specific form and a specific arrangement manner of the fastener 13. This is not described in detail herein.

In some embodiments, the cover portion 12a and the mounting portion 12b have a same thickness.

When the cover portion 12a and the mounting portion 12b are to be integrally formed, they can be integrally formed in the manner described in the foregoing description, for example, integrally formed via die casting, cold pressing, hot pressing, or injection molding. This is not described in detail herein. The cover portion 12a and the mounting portion 12b have the same thickness. Therefore, during formation, they can be quickly formed by performing processes such as punching and cutting on a same metal plate.

In this case, the cover portion 12a and the mounting portion 12b have the same thickness and have the same stress in all positions during formation, thereby increasing integral formation yield. Alternatively, the cover portion 12a and the mounting portion 12b may be quickly formed using a simple process such as plate cutting, achieving a simpler structure of the bottom cover 12 that allows for convenient processing.

In some embodiments, referring to FIG. 7, the cover portion 12a protrudes in a direction away from the accommodating cavity s with respect to the mounting portion 12b.

It can be learned from the foregoing description that the cover portion 12a defines the accommodating cavity s, and that the cover portion 12a protrudes away from the accommodating cavity s means that the cover portion 12a protrudes away from the body 11. In other words, the cover portion 12a and the mounting portion 12b are staggered in the vertical direction, and the cover portion 12a is located at a lowest position of the bottom cover 12.

Under the condition that the cover portion 12a protrudes away from the accommodating cavity s with respect to the mounting portion 12b, a redundant space can be formed between the cover portion 12a and the mounting portion 12b. The redundant space can increase a distance between the cover portion 12a and the battery cell 20. When an external force acts on the cover portion 12a, the external force can be reduced via the redundant space, thereby reducing or avoiding the external force acting on the battery cell 20 while such external force causes damage to the battery cell 20. Especially, when the battery pack 100 is mounted at the bottom of a vehicle 1000 and the bottom cover 12 is located at a lowest position of the battery pack 100, while the vehicle 1000 is running, stone and the like on the ground are likely to fly to the bottom, that is, the bottom cover 12 of the battery pack 100, and impact the bottom cover 12. In this case, the redundant space can reduce the impact of the external force on the battery cell 20. In addition, the cover portion 12a protrudes with respect to the mounting portion 12b, and the cover portion 12a of the bottom cover 12 can serve as a reinforcing structure of the bottom cover 12 to enhance bending strength of the bottom cover 12.

Understandably, in the embodiments of this application, the bottom cover 12 is located at the bottom of the box 10 and is configured to define the accommodating cavity s.

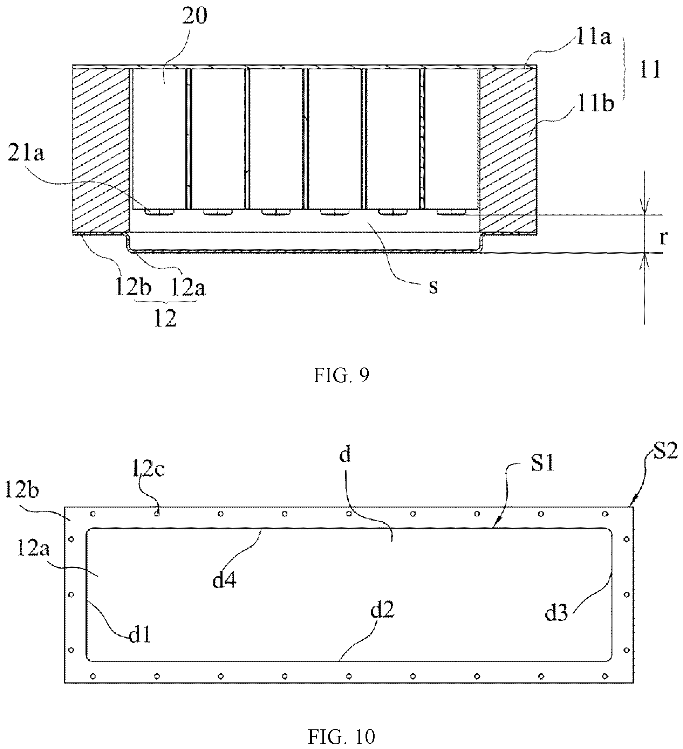

FIG. 9 is a cross-sectional view of the battery pack 100 shown in FIG. 4. In some embodiments, referring to FIG. 9, the bottom cover 12 and the battery cell 20 are spaced apart.

That the bottom cover 12 and the battery cell 20 are spaced apart means that in the vertical direction, a set interval r is kept between the bottom cover 12 and the battery cell 20. Under the action of this set interval r, a buffer space is formed between the bottom cover 12 and the battery cell 20, thereby preventing an external force acting on the bottom cover 12 from being transmitted to the battery cell 20 and damaging the battery cell 20. Especially, when the battery pack 100 is mounted at the bottom of a vehicle 1000 and the bottom cover 12 is located at a lowest position of the battery pack 100, while the vehicle 1000 is running, stone and the like on the ground are likely to fly to the bottom of the battery pack 100, and impact the bottom cover 12. In this case, the buffer space can stop the external force from being transmitted to the battery cell 20 and affecting the battery cell 20.

The bottom cover 12 and the battery cell 20 may be spaced apart in the following manner: a redundant space is formed between the protruding cover portion 12a in the foregoing embodiments and the mounting portion 12b, or a set distance is kept between an end of the battery cell 20 located in the body 11 and facing the bottom cover 12 and an end of the body 11 facing the bottom cover 12. In other words, the battery cell 20 is located in only a partial range of the accommodating cavity s defined by the body 11 rather than in a range of the accommodating cavity s defined by the bottom cover 12, such that the set interval r is kept between the battery cell 20 and the bottom cover 12 so as to form the buffer space.

Understandably, when a plurality of battery cells 20 are provided in the battery pack 100, all the battery cells 20 are spaced from the bottom cover 12. Further, in order to unify the sizes of the battery cells 20, distances from all the battery cells 20 to the bottom cover 12 are equal.

In some embodiments, referring to FIG. 5 and FIG. 6, the bottom cover 12 includes a characteristic surface d facing the accommodating cavity s, and the characteristic surface d is constructed as a plane.

That the characteristic surface d faces the accommodating cavity s indicates that the characteristic surface d is an inner surface of the bottom cover 12 that can define the accommodating cavity s. That the characteristic surface d is constructed as a plane means that in an arrangement direction of the body 11 and the bottom cover 12, the characteristic surface d is a plane perpendicular to the arrangement direction. Under an actual condition, when the body 11 and the bottom cover 12 are arranged in the vertical direction, the characteristic surface d of the bottom cover 12 is a plane parallel to the horizontal plane. When the body 11 and the bottom cover 12 are arranged in the horizontal direction, the characteristic surface d of the bottom cover 12 is a plane parallel to a horizontal plane.

When the characteristic surface d is a plane, the characteristic surface d can keep a substantially equal distance (which may be zero) with all the battery cells 20 accommodated in the accommodating cavity s. When the characteristic surface d keeps a substantially equal distance with the battery cells 20, the accommodating cavity s can accommodate more battery cells 20. In other words, the accommodating cavity s has higher space utilization, the battery pack 100 can have higher energy density, and the battery pack 100 has higher endurance.

Understandably, when the bottom cover 12 includes the cover portion 12a and the mounting portion 12b, the characteristic surface d can be constructed by an inner surface of the cover portion 12a facing the accommodating cavity s. Further understandably, when the bottom cover 12 and the battery cells 20 are spaced apart, the characteristic surface d and the battery cells 20 are spaced apart.

In some embodiments, an outer surface of the cover portion 12a facing away from the accommodating cavity s is parallel to the characteristic surface d.

The outer surface of the cover portion 12a facing away from the accommodating cavity s is arranged away from the characteristic surface d in the vertical direction. The outer surface of the cover portion 12a is configured to be exposed to the atmospheric environment and bear impact of an external force. When the outer surface of the cover portion 12a is a plane flush with the characteristic surface d, especially when the bottom cover 12 and the body 11 are arranged at the bottom of a vehicle 1000 in the vertical direction and the bottom cover 12 is located at a lowest position of the battery pack 100, the outer surface of the cover portion 12a being a plane can significantly reduce wind resistance generated by the battery pack 100, thereby helping to reduce driving resistance of the vehicle 1000, reduce driving energy consumption of the vehicle 1000 and improve the endurance of the battery pack 100.

FIG. 10 is a schematic diagram of a front projection of the bottom cover 12 shown in FIG. 6 in a vertical direction. S 1 represents a projection area of the characteristic surface d, and S2 represents a projection area of the bottom cover 12.

In some embodiments, in the vertical direction, an area S 1 of a front projection of the characteristic surface d and an area S2 of a front projection of the bottom cover 12 satisfy S 1/S2 ≥ 0.2. Further, S 1/S2 ≥ 0.5.

In an embodiment shown in FIG. 10, in a front projection in the vertical direction, the characteristic surface d is formed by a first characteristic side d1, a second characteristic side d2, a third characteristic side d3, and a fourth characteristic side d4 that are connected head to tail in an enclosing manner. An area S1 of the front projection of the characteristic surface d is an area of a region defined by the first characteristic side d1, the second characteristic side d2, the third characteristic side d3, and the fourth characteristic side d4. The area S2 of the front projection of the bottom cover 12 is an area of a region defined by an edge of the bottom cover 12.

Specifically, a ratio of the area S1 of the front projection of the characteristic surface d to the area S2 of the front projection of the bottom cover 12 may be 0.3, 0.4, 0.5, 0.6, 0.7, 0.8, 0.9, or 1.

**Table 2 Influence of ratio of area S1 to area S2 on endurance mileage of battery pack 100**

| No. | S1/mm² | S2/mm² | S1/S2 | Test result |
|---|---|---|---|---|
| 1 | 0.3×10⁶ | 2.6×10⁶ | 0.115 | Poor |
| 2 | 0.52×10⁶ | 2.6×10⁶ | 0.2 | Good |
| 3 | 0.94×10⁶ | 2.6×10⁶ | 0.362 | Good |
| 4 | 1.3×10⁶ | 2.6×10⁶ | 0.5 | Fair |
| 5 | 1.5×10⁶ | 2.6×10⁶ | 0.577 | Fair |
| 6 | 1.8×10⁶ | 2.6×10⁶ | 0.692 | Fair |
| 7 | 2.2×10⁶ | 2.6×10⁶ | 0.846 | Excellent |
| 8 | 2.4×10⁶ | 2.6×10⁶ | 0.923 | Excellent |
| 9 | 2.6×10⁶ | 2.6×10⁶ | 1 | Excellent |

Table 2 shows the influence of the ratio of the area S1 of the front projection of the characteristic surface d to the area S2 of the front projection of the bottom cover 12 on the endurance mileage of the battery pack 100, based on tests performed according to the standard of NEDC (New European Driving Cycle). When S1/S2 is less than 0.2, the battery pack 100 has a short endurance mileage, and this is because when the characteristic surface d is small, the accommodating cavity s has low space utilization, a small number of battery cells 20 are accommodated in the battery pack 100, and the battery pack 100 has low energy density, resulting in a short endurance mileage of the battery pack 100 and a poor test result. When the value of S1/S2 reaches 0.2 or above (especially when S1/S2 reaches 0.5 or above), with increase of the value, the battery pack 100 has longer endurance mileage, and this is because a larger characteristic surface d results in higher space utilization of the accommodating cavity s and higher energy density of the battery pack 100. Therefore, the endurance mileage of the battery pack 100 is getting longer, and the test result is getting better.

The characteristic surface d is a plane. Therefore, a larger area of the bottom cover 12 that is occupied by the characteristic surface d indicates a smaller area of the inner surface of the bottom cover 12 that recesses or protrudes with respect to the characteristic surface d. The inner surface recessing with respect to the characteristic surface d causes irregularity of a partial space in the accommodating cavity s, so that the battery cell 20 cannot be mounted, resulting in low space utilization of the accommodating cavity s. The partial space of the accommodating cavity s that is formed by the inner surface protruding with respect to the characteristic surface d also fails to accommodate the battery cell 20 due to irregularity, resulting in low space utilization of the accommodating cavity s. When the accommodating cavity s has low space utilization, the battery cell 20 in unit space of the battery pack 100 occupies a small volume, resulting in low energy density of the battery pack 100. Therefore, a larger area of the bottom cover 12 that is occupied by the characteristic surface d indicates higher space utilization of the battery pack 100, higher energy density of the battery pack 100, and shorter endurance mileage of the battery pack 100.

In some embodiments, referring to FIG. 10, in the vertical direction, the front projection of the characteristic surface d is rectangular.

As shown in FIG. 10, the rectangular characteristic surface d is a region enclosed and defined by the first characteristic side d1, the second characteristic side d2, the third characteristic side d3, and the fourth characteristic side d4. In the battery pack 100, most of the plurality of battery cells 20 are assembled to form a rectangular structure, and the characteristic surface d is constructed in a rectangular shape to adapt to an overall structure formed by the battery cells 20 in the battery pack 100, helping to arrange more battery cells 20 in the accommodating cavity s, thereby increasing the energy density of the battery pack 100.

Certainly, in other embodiments, in the vertical direction, the front projection of the characteristic surface d may be of other shapes, for example, a circular shape, a polygonal shape, an elliptic shape, and other irregular shapes.

In the embodiments of this application, the body 11 includes a bearing member 11a.

The bearing member 11a may be a component for defining the accommodating cavity s in the body 11 (for example, the bearing member 11a is the top cover or frame mentioned above) or may be a component that is not for defining the accommodating cavity s but is located in the accommodating cavity s (for example, the bearing member 11a is the supporting plate mentioned above). This is not specifically limited. When the bearing member 11a is configured to define the accommodating cavity s, the bearing member 11a may be a component in the body 11 that is directly connected to the bottom cover 12 (for example, the frame mentioned above) or may be a component that is not connected to the bottom cover 12 (for example, the top cover mentioned above).

In some embodiments, the battery cell 20 is disposed at a surface of the bearing member 11a.

In this case, the bearing member 11a is a component capable of bearing the weight of the battery cell 20 or may be a bearing plate, a bearing rod, a bearing block, a bearing sheet, a bearing frame, a bearing rope, or the like. This is not specifically limited. Specifically, it is possible that the battery cell 20 is supported on the bearing member 11a, and in this case the battery cell 20 may be disposed above the bearing member 11a. Specifically, it is also possible that the battery cell 20 is hung from the bearing member 11a, and in this case, the battery cell 20 may be hung from a wall surface of the bearing member 11a parallel to the gravity direction of the battery cell 20.

The battery cell 20 may be disposed either above the bearing member 11a (for example, when the bearing member 11a serves as a supporting plate located in the accommodating cavity s). Alternatively, the battery cell 20 may be disposed below the bearing member 11a (for example, when the bearing member 11a serves as a top cover for defining the accommodating cavity s). Alternatively, the battery cell 20 may be disposed on a side of the bearing member 11a (for example, when the bearing member 11a serves as a frame for defining the accommodating cavity s).

In some embodiments, the battery cell 20 is adhered to the bearing member 11a.

Specifically, the battery cell 20 may be adhered to the bearing member 11a using adhesives such as an epoxy adhesive and an acrylate adhesive. This is not specifically limited. In this case, the battery cell 20 is adhered to the bearing member 11a, which not only allows for easy connection but also simplifies the structure of the battery pack 100.

In some embodiments, the battery cell 20 is disposed on the surface of the bearing member 11a, and a minimum thickness H of the bearing member 11a and a weight M of the battery pack 100 satisfy 0.0002 mm/Kg < H/M ≤ 0.2 mm/Kg.

The thickness of the bearing member 11a refers to a distance from a surface of one side of the bearing member 11a for arranging the battery cell 20 to a surface of the other side back away from the former surface. When the battery cell 20 is disposed on the surface of the bearing member 11a in the vertical direction, the minimum thickness H of the bearing member 11a refers to a shortest distance between two side surfaces of the bearing member 11a located in the vertical direction. When the battery cell 20 is on the surface of the bearing member 11a in a horizontal direction, the thickness of the bearing member 11a refers to a shortest distance between two side surfaces of the bearing member 11a located in the horizontal direction.

The weight of the battery pack 100 contains a total weight of the body 11, the bottom cover 12, the battery cell 20, and other constituent structures (for example, wiring harnesses, thermal management system, and power management system).

Specifically, a ratio of the minimum thickness H of the bearing member 11a to the weight M of the battery pack 100 may be designed to be: 0.0003 mm/kg, 0.0005 mm/kg, 0.0008 mm/kg, 0.001 mm/kg, 0.003 mm/kg, 0.005 mm/kg, 0.008 mm/kg, 0.01 mm/kg, 0.03 mm/kg, 0.05 mm/kg, 0.06 mm/kg, 0.08 mm/kg, 0.1 mm/kg, 0.12 mm/kg, 0.15 mm/kg, 0.16 mm/kg, 0.19 mm/kg, or 0.02mm/ kg.

**Table 3 Influence of ratio of minimum thickness H of bearing member 11a to weight M of battery pack 100 on safety performance of battery pack 100**

| No. | H (mm) | M (Kg) | H/M (mm/Kg) | Test result |
|---|---|---|---|---|
| 1 | 0.1 | 1000 | 0.0001 | Fire and explosion occurred |
| 2 | 0.2 | 1000 | 0.0002 | Fire and explosion occurred |
| 3 | 0.6 | 600 | 0.001 | No fire, no explosion |
| 4 | 1.5 | 500 | 0.003 | No fire, no explosion |
| 5 | 2.5 | 500 | 0.005 | No fire, no explosion |
| 6 | 4 | 500 | 0.008 | No fire, no explosion |
| 7 | 3 | 300 | 0.01 | No fire, no explosion |
| 8 | 9 | 300 | 0.03 | No fire, no explosion |
| 9 | 10 | 200 | 0.05 | No fire, no explosion |
| 10 | 12 | 200 | 0.06 | No fire, no explosion |
| 11 | 16 | 200 | 0.08 | No fire, no explosion |
| 12 | 20 | 200 | 0.1 | No fire, no explosion |
| 13 | 30 | 200 | 0.15 | No fire, no explosion |
| 14 | 40 | 200 | 0.02 | No fire, no explosion |

Table 3 shows results of the influence of the ratio of the minimum thickness H of the bearing member 11a to the weight M of the battery pack 100 on the safety performance of the battery pack 100, based on tests performed according to the standards of GB 38031-2020 Safety Requirements for Traction Batteries for Electric Vehicles. It can be seen from Table 3 that when the value of H/M is not greater than 0.0002 mm/Kg, the battery pack 100 has fire and explosion, and this is because the structural strength of the battery pack 100 does not meet the requirements. When the value of H/M is greater than 0.0002 mm/Kg, the battery pack 100 has no fire and no explosion. However, when H/M is excessively large (for example, greater than 0.1), due to small weight of the battery pack 100 and large thickness of the bearing plate, there are only a small proportion of battery cells 20 in unit volume of the battery pack 100, resulting in low space utilization, excessively low energy density of the battery pack 100, and high using cost of the battery pack 100. Further, 0.0005 mm/Kg ≤ H/M ≤ 0.1 mm/Kg. In this case, the structural strength of the battery pack 100 meets the requirements and the battery pack 100 has high energy density, so the battery pack 100 has higher endurance, without safety accidents such as fire and explosion.

In some embodiments, the minimum thickness H of the bearing member 11a satisfies 0.2 mm < H < 20 mm.

Specifically, the minimum thickness H of the bearing member 11a may be 0.3 mm, 0.5 mm, 0.8 mm, 0.9 mm, 1.0 mm, 1.2 mm, 1.5 mm, 2 mm, 2.5 mm, 3 mm, 3.5 mm, 4 mm, 4.5 mm, 5 mm, 5.5 mm, 6 mm, 6.5 mm, 7 mm, 7.5 mm, 8 mm, 9 mm, 10 mm, 12 mm, 15 mm, 16 mm, 18 mm, or 19 mm. Further, 0.5 mm ≤ H ≤ 10 mm. In this case, the bearing member 11a has good structural strength, the battery pack 100 has good overall strength, and the battery pack 100 is less likely to have fire and explosion. In addition, the bearing member 11a occupies a small overall volume of the battery pack 100, resulting in high space utilization of the battery pack 100 and high energy density of the battery pack 100.

In some embodiments, referring to FIG. 3 and FIG. 4, the battery cell 20 is suspended under the bearing member 11a.

That the battery cell 20 is suspended under the bearing member 11a means that the battery cell 20 is disposed below the bearing member 11a in the vertical direction, and the bearing member 11a bears the weight of the battery cell 20. The battery cell 20 is suspended under the bearing member 11a in manners including: the battery cell 20 is directly adhered to a lower surface of the bearing member 11a; the battery cell 20 is connected to the bearing member 11a via a fastener 13 and located below the bearing member 11a; and the battery cell 20 is hung from the bearing member 11a via a hook or the like and located below the bearing member 11a.

In this case, the battery cell 20 is suspended below the bearing member 11a, and the bottom cover 12 is located at the bottom of the box 10. When maintenance is to be performed within the battery pack 100, the bottom cover 12 can be dismounted to expose the battery cell 20 without dismounting the bearing member 11a, so the battery pack 100 is maintained more conveniently. In addition, when the battery pack 100 is to be maintained, the battery cell 20 can be dismounted from below the bearing member 11a. Especially, when the bearing member 11a bears a force as at least a part of a chassis of a vehicle 1000, the battery cell 20 is dismounted from below the bearing member 11a, and the bearing member 11a does not need to be dismounted, allowing for easy maintenance of the battery pack 100.

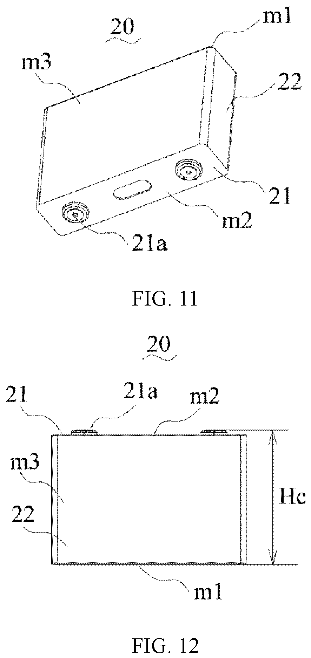

FIG. 11 is a schematic appearance diagram of a battery cell 20 according to some embodiments of this application. FIG. 12 is a front view of the battery cell 20 shown in FIG. 11.

In some embodiments, referring to FIG. 4 and FIG. 11, an outer surface of the battery cell 20 facing the bearing member 11a is a first outer surface m1; the battery cell 20 includes an electrode terminal 21a; and the electrode terminal 21a is arranged on an outer surface other than the first outer surface m1 of the battery cell 20.

As described above, the electrode terminal 21a is configured to be electrically connected to the electrode assembly 23 in the battery cell 20 for outputting or inputting electrical energy of the battery cell 20. The electrode terminal 21a at least partially protrudes out of the battery cell 20 to be electrically connected to the outside. Serial connection and parallel connection of the battery cells 20 are both implemented by serial connection and parallel connection of their respective electrode terminals 21a. The electrode terminal 21a is conductive to enable electrical transmission, and may be an aluminum electrode, a copper electrode, or the like.

The electrode terminal 21a is arranged on an outer surface other than the first outer surface m1 of the battery cell 20. The first outer surface m1 faces the bearing member 11a and is typically a smooth surface, from which no structures such as an electrode terminal 21a and an electrolyte injection hole protrude or recess. When the battery cell 20 is suspended under the bearing member 11a, the first outer surface m1 is an upward outer surface of the battery cell 20. In a specific embodiment, the battery cell 20 includes the housing 22 and the end cover 21 in the foregoing description. The housing 22 and the end cover 21 form an internal environment of the battery cell 20 for accommodating the electrode assembly 23. The end cover 21 is located at an end of the housing 22, and the electrode terminal 21a is arranged on the end cover 21. In this case, any outer surface of the housing 22 can serve as the first outer surface m1 of the battery cell 20.

The electrode terminal 21a includes a positive electrode terminal and a negative electrode terminal. The positive electrode terminal is configured to be electrically connected to a positive electrode plate in the electrode assembly 23, and the negative electrode terminal is configured to be electrically connected to a negative electrode plate in the electrode assembly 23. It should be noted that the positive electrode terminal and the negative electrode terminal may be arranged on a same outer surface of the battery cell 20 (for example, a prismatic battery cell 20) or may be respectively arranged on two different outer surfaces of the battery cell 20 (for example, a cylindrical battery cell 20). When the positive electrode terminal and the negative electrode terminal are respectively arranged on two different outer surfaces of the battery cell 20, the first outer surface m1 is a surface of the battery cell 20 different from the two outer surfaces.

In addition to the battery cells 20, the battery pack 100 is further typically provided with a sampling wiring harness and a high-voltage wiring harness that connect the battery cells 20, as well as components such as a protective structure for protecting the battery cells 20. In this case, the electrode terminal 21a is arranged on another surface other than the first outer surface m1 of the battery cell 20. Arrangement of the sampling wiring harness, the high-voltage wiring harness, and the components such as the protective structure on the electrode terminal 21a is not limited by the bearing member 11a, and each of the components can be arranged in the space between other structures other than the body 11 and the bearing member 11a of the battery cell 20 (for example, in the space between the battery cell and the bottom cover and/or the space between the battery cell and an inner side surface of the body), allowing for easier arrangement of the components. In addition, the first outer surface m1 is a smooth surface. Therefore, the first outer surface m1 can be attached to the bearing member 11a. In this way, the battery cell 20 and the bearing member 11a can be mounted in a manner of abutting against each other, without leaving space between the battery cell 20 and the bearing member 11a, helping to improve the space utilization of the battery pack 100.

In some embodiments, referring to FIG. 11 and FIG. 12, the battery cell 20 has a second outer surface m2 facing away from the first outer surface m1, and the electrode terminal 21a is arranged on the second outer surface m2.

The second outer surface m2 is an outer surface of the battery cell 20 facing away from the first outer surface m1. When the battery cell 20 is suspended under the bearing member 11a, the second outer surface m2 faces the bottom cover 12. As described above, the battery cell 20 and the bottom cover 12 may be spaced apart. In this case, a buffer space is present between the second outer surface m2 and the bottom cover 12, and a portion of the electrode terminal 21a protruding out of the battery cell 20 is located in the buffer space, such that the wiring harnesses and a connecting plate connected to the electrode terminal 21a can be arranged in the buffer space. In addition, the buffer space further has a function of stopping the external force impacting the bottom cover 12 from acting on the battery cell 20 and damaging the battery cell 20 mentioned above. Therefore, the buffer space can not only prevent effects of the external force but also allow for easy arrangement of the wiring harnesses and the like, achieving double benefits. Besides, space utilization of the buffer space and battery pack 100 is improved.

Certainly, in other embodiments, referring to FIG. 11 and FIG. 12, the electrode terminal 21a may alternatively be arranged on a third outer surface intersected with the first outer surface m1 of the battery cell 20.

In some embodiments of this application, referring to FIG. 4, FIG. 5, and FIG. 9, the bearing member 11a is located at the top of the box 10 and is configured to define the accommodating cavity s. The bottom cover 12 is located at the bottom of the box 10. Therefore, the bearing member 11a and the bottom cover 12 are arranged opposite each other. The bearing member 11a is a structure at the top of the box 10, so the box 10 can be mounted to the mounting body via the bearing member 11a. In this case, the battery cell 20 disposed at the bearing member 11a can enhance the strength of the bearing member 11a, thereby enhancing rigidity of the top of the battery pack 100. In this way, application scenarios for the battery pack 100 are expanded to scenarios in which the top is stressed, for example, the battery pack 100 is used as a portion of a chassis of a vehicle 1000.

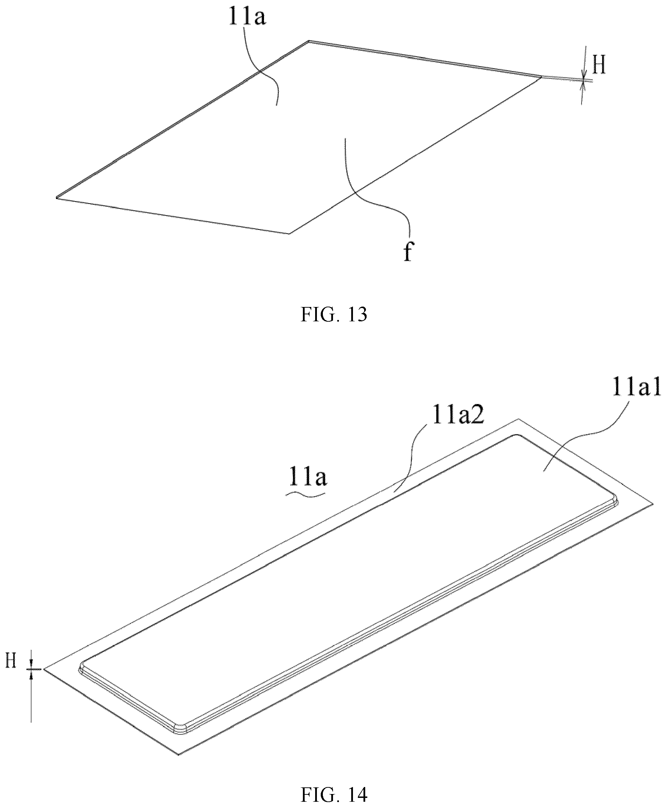

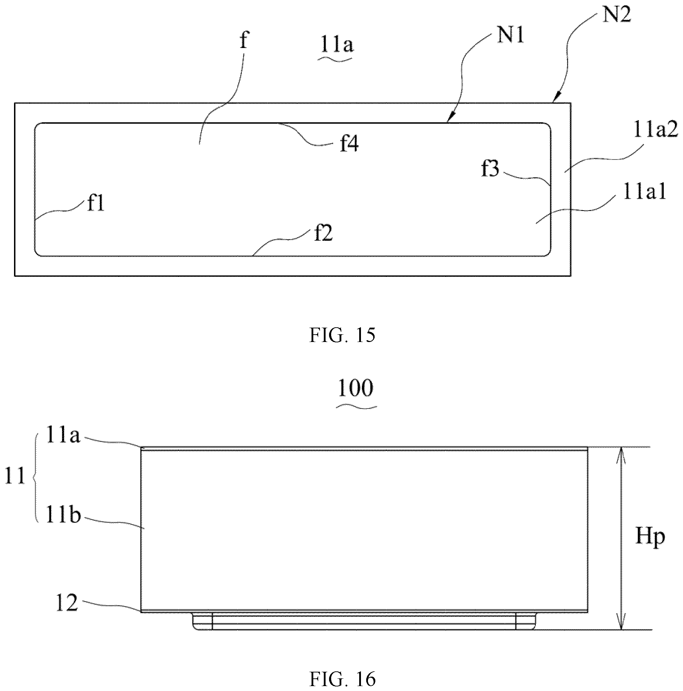

FIG. 13 is a schematic structural diagram of a bearing member 11a according to some embodiments of this application. FIG. 14 is a schematic structural diagram of a bearing member 11a according to some embodiments of this application. FIG. 15 is a front projection view of the bearing member 11a shown in FIG. 14 in a vertical direction.

In some embodiments, the bearing member 11a has a bearing surface f facing the accommodating cavity s, and the bearing surface f is constructed as a plane.

The bearing surface f is an inner surface of the bearing member 11a facing the accommodating cavity s and is configured to define the accommodating cavity s. That the bearing surface f is constructed as a plane means that in an arrangement direction of the body 11 and the bottom cover 12, the bearing surface f is a plane perpendicular to the arrangement direction. Under an actual condition, when the body 11 and the bottom cover 12 are arranged in the vertical direction, the bearing member 11a and the bottom cover 12 are disposed opposite each other in the vertical direction, and the bearing surface f of the bearing member 11a is a plane parallel to the horizontal plane. When the body 11 and the bottom cover 12 are arranged in the horizontal direction, the bearing member 11a and the bottom cover 12 are disposed opposite each other in the horizontal direction, and the bearing surface f of the bearing member 11a is a plane parallel to a vertical plane.

As shown in FIG. 13, the bearing member 11a may be the entire inner surface of the bearing member 11a facing the accommodating cavity s. In this case, the bearing member 11a may be in a flat plate shape. As shown in FIG. 14 and FIG. 15, the bearing member 11a may alternatively be a portion of the inner surface of the bearing member 11a facing the accommodating cavity s. In this case, the bearing surface f is only a portion of the inner surface of the bearing member 11a for defining the accommodating cavity s.

When the bearing surface f is a plane, the bearing surface f can keep a substantially equal distance (which may be zero) with all the battery cells 20 accommodated in the accommodating cavity s. When the bearing surface f keeps a substantially equal distance with the battery cells 20, the accommodating cavity s can accommodate more battery cells 20. In other words, the accommodating cavity s has higher space utilization, the battery pack 100 can have higher energy density, and the battery pack 100 has higher endurance.

In some embodiments, the battery cell 20 is disposed on the bearing surface f. The battery cell 20 is mounted to the bearing member 11a via the bearing surface f. The battery cell 20 may be adhered to the bearing surface f, may alternatively be fixedly connected to the bearing surface f via a fastener 13 and the like, or may alternatively be welded or clamped to the bearing surface f. This is not specifically limited.

The bearing surface f is a plane. Therefore, the bearing surface f can have a large contact area with the battery cell 20 disposed on the bearing surface f, so that the battery cell 20 is mounted more firmly. In addition, when the bearing surface f is a plane, compared with an uneven surface such as a curved surface, the bearing surface f can be connected to more battery cells 20, increasing the number of the battery cells 20 mounted in the battery pack 100, thereby increasing the space utilization and energy density of the battery pack 100.

Understandably, when the battery cell 20 is suspended under the bearing member 11a, the battery cell 20 is suspended under the bearing surface f.

In some embodiments, in the vertical direction, an area N1 of a front projection of the bearing surface f and an area N2 of a front projection of the bearing member 11a satisfy N1/N2 ≥ 0.2. Further, N1/N2 ≥ 0.5.

In an embodiment shown in FIG. 15, in a front projection in the vertical direction, the bearing surface f is formed by a first bearing side f1, a second bearing side f2, a third bearing side f3, and a fourth bearing side f4 that are connected head to tail in an enclosing manner. The area N1 of the front projection of the bearing surface f is an area of a region defined by the first bearing side f1, the second bearing side f2, the third bearing side f3, and the fourth bearing side f4. The area N2 of the front projection of the bearing member 11a is an area of a region defined by an edge of the bearing member 11a.

Specifically, a ratio of the area N1 of the front projection of the bearing surface f to the area N2 of the front projection of the bearing member 11a may be 0.2, 0.3, 0.4, 0.5, 0.6, 0.7, 0.8, 0.9, or 1.

**Table 4 Influence of ratio of area N1 to area N2 on endurance mileage of battery pack 100**

| No. | N1 (mm²⁾ | N2 (mm²⁾ | N1/N2 | Test result |
|---|---|---|---|---|
| 1 | 1.8×10⁵ | 2.16×10⁶ | 0.083 | Poor |
| 2 | 2.16×10⁵ | 2.16×10⁶ | 0.1 | Poor |
| 3 | 4.32×10⁵ | 2.16×10⁶ | 0.2 | Good |
| 4 | 8×10⁵ | 2.16×10⁶ | 0.37 | Good |
| 5 | 1.2×10⁶ | 2.16×10⁶ | 0.56 | Fair |
| 6 | 1.7×10⁶ | 2.16×10⁶ | 0.787 | Excellent |
| 7 | 2.16×10⁶ | 2.16×10⁶ | 1 | Best |

Table 4 shows the influence of the ratio of the area N1 of the front projection of the bearing surface f to the area N2 of the front projection of the bearing member 11a on the endurance mileage of the battery pack 100, based on tests performed according to the standard of NEDC (New European Driving Cycle). When N1/N2 is less than 0.2, the battery pack 100 has a short endurance mileage, and this is because when the bearing surface f is small, a small number of battery cells 20 are supported on the bearing member 11a, the accommodating cavity s has low space utilization and the battery pack 100 has low energy density, resulting in a short endurance mileage of the battery pack 100 and a poor test result. When the value of N1/N2 reaches 0.2 or above (especially when N1/N2 reaches 0.5 or above), with increase of the value, the battery pack 100 has a longer endurance mileage, and this is because a larger bearing surface f enables the bearing member 11a to bear more battery cells 20 and results in higher space utilization of the accommodating cavity s and higher energy density of the battery pack 100. Therefore, the endurance mileage of the battery pack 100 is getting longer, and the test result is getting better. When the bearing member 11a is a flat plate structure shown in FIG. 13, in this case, the area N1 of the front projection of the bearing surface f is equal to the area N2 of the front projection of the bearing member 11a, and the battery pack 100 has the highest endurance.

In some embodiments, in the vertical direction, the front projection of the bearing surface f is rectangular.

As shown in FIG. 15, the rectangular bearing surface f is a region enclosed and defined by the first bearing side f1, the second bearing side f2, the third bearing side f3, and the fourth bearing side f4. In the battery pack 100, most of the plurality of battery cells 20 are assembled to form a rectangular structure, and the bearing surface f is constructed in a rectangular shape to adapt to an overall structure of the battery, helping to arrange more battery cells 20 in the accommodating cavity s, thereby increasing the energy density of the battery pack 100.

Certainly, in other embodiments, in the vertical direction, the front projection of the bearing surface f may be of other shapes, for example, a circular shape, a polygonal shape, an elliptic shape, and other irregular shapes.

In some embodiments, referring to FIG. 14, the bearing member 11a includes a bearing portion 11a1 and a connection portion 11a2. The connection portion 11a2 is connected to an edge of the bearing portion 11a1 in an enclosing manner, the bearing portion 11a1 is configured to define the accommodating cavity s, and the connection portion 11a2 is connected to a portion other than the bearing member 11a of the box 10.

The bearing portion 11a1 is configured to define the accommodating cavity s, and the connection portion 11a2 is configured to be connected to the portion other than the bearing member 11a of the box 10, without defining the accommodating cavity s. The bearing portion 11a1 may be a plate-shaped or blocky component or may be a flat plate-shaped or bent plate-shaped component. This is not specifically limited. It can be seen from FIG. 14 that the connection portion 11a2 enclosing the edge of the bearing portion 11a1 means that the connection portion 11a2 is a continuous structure with its head and tail in a closed connection along the edge of the bearing portion 11a1. Understandably, in a projection in the vertical direction, the connection portion 11a2 has a specified width so as to have an appropriate contact area with structures other than the bearing member 11a of the box 10, allowing for easy mounting and connection between the connection portion 11a2 and the structures other than the bearing member 11a of the box 10.

The bearing portion 11a1 and the connection portion 11a2 may be integrally formed. When the bearing member 11a is made of a metal material (for example, aluminum, iron, or stainless steel), the bearing portion 11a1 and the connection portion 11a2 may be integrally formed by die casting, calcining, hot pressing, cold pressing, or the like. When the bearing member 11a is made of a plastic material (for example, PP, PE, or ABS), the bearing portion 11a1 and the connection portion 11a2 may be integrally formed by injection molding. The bearing portion 11a1 and the connection portion 11a2 may alternatively be separately formed first and then connected together. When the bearing portion 11a1 and the connection portion 11a2 are made of a metal material, the bearing portion 11a1 and the connection portion 11a2 may be welded or adhered together. When the bearing portion 11a1 and the connection portion 11a2 are made of a plastic material, the cover portion 12a and the mounting portion 12b may be adhered together. Certainly, the bearing portion 11a1 and the connection portion 11a2 may alternatively be fixedly connected by other methods such as clamping or riveting.

Specifically, the connection portion 11a2 is connected to a portion other than the bearing member 11a of the body 11 and may be connected in an integral formation manner or fixed connection manner. When the connection portion 11a2 is integrally formed with the portion other than the bearing member 11a of the body 11, it means that the body 11 is an integrally formed component, and methods such as die casting, calcining, hot pressing, cold pressing, and injection molding can be used for integral formation. When the connection portion 11a2 is fixedly connected to the portion other than the bearing member 11a of the body 11, the fixed connection can be implemented by fastening of a fastener 13, clamping of a clamping structure, and the like. This is not specifically limited.

The bearing portion 11a1 and the connection portion 11a2 may be located in a same plane. Specifically, optionally, two surfaces of the bearing portion 11a1 and the connection portion 11a2 that both face the bottom cover 12 are located in a same plane, and/or two surfaces of the bearing portion 11a1 and the connection portion 11a2 that both face away from the bottom cover 12 are located in a same plane. When the two surfaces of the bearing portion 11a1 and the connection portion 11a2 that both face the bottom cover 12 are located in a same plane and the two surfaces that both face away from the bottom cover 12 are located in a same plane, the bearing portion 11a1 and the connection portion 11a2 can form a flat plate-shaped bearing member 11a (as shown in FIG. 13).

The bearing portion 11a1 and the connection portion 11a2 may not be located in a same plane. Specifically, the bearing portion 11a1 protrudes away from the accommodating cavity s with respect to the connection portion 11a2 or the bearing portion 11a1 recesses towards the accommodating cavity s with respect to the connection portion 11a2. This is not specifically limited. The bearing portion 11a1 and the connection portion 11a2 may be equal or unequal in thickness, which is not specifically limited.

In this case, the bearing member 11a defines the accommodating cavity s via the bearing portion 11a1 and is connected to a structure other than the bearing member 11a of the body 11 via the connection portion 11a2, achieving a clear structure.

Understandably, when the bearing member 11a includes the bearing portion 11a1 and the connection portion 11a2, the battery cell 20 is disposed on the bearing portion 11a1.

Understandably, when the bearing member 11a includes the bearing portion 11a1 and the connection portion 11a2, an inner surface of the bearing portion 11a1 facing the accommodating cavity s forms the bearing surface f.

In some embodiments, the bearing portion 11a1 protrudes in a direction away from the accommodating cavity s with respect to the connection portion 11a2.

It can be learned from the foregoing description that the bearing portion 11a1 defines the accommodating cavity s, and that the bearing portion 11a1 protrudes in a direction away from the accommodating cavity s means that the bearing portion 11a1 and the connection portion 11a2 are staggered in the vertical direction. The bearing portion 11a1 is located at a highest position of the bearing member 11a. In this case, a certain space, as a portion of the accommodating cavity s, can be formed between the bearing portion 11a1 and the connection portion 11a2, and this space can accommodate the battery cell 20.

When the bearing portion 11a1 protrudes away from the accommodating cavity s with respect to the connection portion 11a2, the bearing portion 11a1 can serve as a reinforcing structure of the bearing member 11a to enhance bending strength of the bearing member 11a.

In some embodiments, the bearing portion 11a1 and the connection portion 11a2 have a same thickness.

When the bearing portion 11a1 and the connection portion 11a2 have the same thickness, the bearing portion 11a1 and the connection portion 11a2 can be integrally formed by performing die casting, cold pressing, and hot pressing on a same plate. The bearing member 11a is formed more conveniently. In addition, the bearing portion 11a1 and the connection portion 11a2 have the same thickness and have the same stress in all positions during formation, thereby increasing formation yield of the bearing member 11a.

In some embodiments, an outer surface of the bearing portion 11a1 facing away from the accommodating cavity s is parallel to the bearing surface f.

The outer surface of the bearing portion 11a1 facing away from the accommodating cavity s is disposed away from the bearing surface f in the vertical direction. The outer surface of the bearing portion 11a1 can be exposed to the atmospheric environment. When the battery pack 100 is mounted to a vehicle 1000, the bearing portion 11a1 of which the outer surface is a plane can reduce the driving resistance of the vehicle 1000, reduce the driving energy consumption of the vehicle 1000, and improve the endurance of the battery pack 100.

In some embodiments, referring to FIG. 3, FIG. 4, and FIG. 9, the body 11 includes a frame 11b and a bearing member 11a. The frame 11b encloses a cavity q with two ends that are through in the vertical direction; the bottom cover 12 and the bearing member 11a respectively cover two opposite ends of the cavity q in the vertical direction; and the bottom cover 12, the frame 11b, and the bearing member 11a jointly enclose the accommodating cavity s.

The frame 11b encloses the cavity q with the two ends that are through in the vertical direction, the bearing member 11a covers the top of the cavity q, and the bottom cover 12 covers the bottom of the cavity q. To be specific, the bearing member 11a is located at the top of the box 10 and is configured to define the accommodating cavity s, and the bottom cover 12 is located at the bottom of the box 10 and is configured to define the accommodating cavity s. The frame 11b, the bearing member 11a, and the bottom cover 12 enclose the accommodating cavity s. The frame 11b, the bearing member 11a, and the bottom cover 12 may be made of a same material, for example, aluminum alloy, copper alloy, a steel material, or plastic. Certainly, the frame 11b, the bearing member 11a, and the bottom cover 12 may alternatively be made of different materials. This is not specifically limited. In a front projection in the vertical direction, the frame 11b may be rectangular, circular, polygonal, or the like. This is not specifically limited.

When the bearing member 11a includes the bearing portion 11a1 and the connection portion 11a2, the bearing member 11a is connected to the frame 11b via the connection portion 11a2. When the bottom cover 12 includes the cover portion 12a and the mounting portion 12b, the bottom cover 12 is connected to the frame 11b via the mounting portion 12b.

In this case, on the basis of the frame 11b, the bearing member 11a and the bottom cover 12 are respectively connected to the two ends of the frame 11b in the vertical direction to form the accommodating cavity s of the battery pack 100, achieving a simple structure of the box 10.

In some embodiments, the bearing member 11a and the frame 11b are fixedly connected or integrally formed. The bearing member 11a and the frame 11b may be integrally formed by injection molding, die casting, calcining, cold pressing, hot pressing, and the like. The bearing member 11a and the frame 11b may be fixedly connected by fastening of a fastener 13, clamping of a clamping structure, welding, adhesion, hot melting, or the like.

When the bearing member 11a and the frame 11b are integrally formed, and the body 11 is integrally formed, the body 11 can be connected to the bottom cover 12 to implement assembly of the box 10, achieving convenient assembly of the box 10. When the bearing member 11a and the frame 11b are fixedly connected, the bearing member 11a and the frame 11b are formed using a simple process, reducing process cost of the box 10.

Understandably, when the bearing member 11a includes the bearing portion 11a1 and the connection portion 11a2, the connection portion 11a2 is connected to the frame 11b. When the bottom cover 12 includes the cover portion 12a and the mounting portion 12b, the mounting portion 12b is connected to the frame 11b.

FIG. 16 is a front view of the battery pack 100 shown in FIG. 4. Referring to FIG. 16 and FIG. 12, in some embodiments, in the vertical direction, a height Hc of the battery cell 20 and a height Hp of the battery pack 100 satisfy 0.02 ≤ Hc/Hp ≤ 0.98.

The height Hc of the battery cell 20 refers to a maximum length of the battery cell 20 in the vertical direction when the body 11 and the bottom cover 12 are arranged in the vertical direction. Taking the battery cell 20 in FIG. 12 as an example, when the first outer surface m1 of the battery cell 20 faces away from an outer surface where the electrode terminal 21a is located, the maximum length of the battery cell 20 refers to a distance from the electrode terminal 21a to the first outer surface m1. Certainly, when the first outer surface m1 of the battery cell 20 is adjacent to the outer surface where the electrode terminal 21a is located, the height Hc of the battery cell 20 refers to a distance from the first outer surface m1 of the battery cell 20 to the outer surface facing away from the first outer surface m1.

The height Hp of the battery pack 100 refers to a maximum length of the battery pack 100 in the vertical direction when the body 11 and the bottom cover 12 are arranged in the vertical direction.

Specifically, a ratio of the height Hc of the battery cell 20 to the height Hp of the battery pack 100 may be 0.02, 0.03, 0.05, 0.08, 0.1, 0.15, 0.2, 0.25, 0.3, 0.35, 0.4, 0.45, 0.5, 0.55, 0.6, 0.65, 0.7, 0.75, 0.8, 0.85, 0.9, 0.95, or 0.98.

**Table 5 Influence of ratio of height He of battery cell 20 to height Hp of battery pack 100 on safety of battery pack 100**

| No. | Hc/mm | Hp/mm | Hc/Hp | Test result |
|---|---|---|---|---|
| 1 | 248 | 252 | 0.984 | Fire and explosion occurred |
| 2 | 138 | 150 | 0.92 | No fire, no explosion |
| 3 | 115 | 135 | 0.85 | No fire, no explosion |
| 4 | 90 | 120 | 0.75 | No fire, no explosion |
| 5 | 78 | 120 | 0.65 | No fire, no explosion |
| 6 | 110 | 200 | 0.55 | No fire, no explosion |
| 7 | 60 | 200 | 0.3 | No fire, no explosion |
| 8 | 60 | 600 | 0.1 | No fire, no explosion |
| 9 | 50 | 1000 | 0.05 | No fire, no explosion |

Table 5 shows the influence of the ratios of the heights Hc of several groups of battery cells 20 to the height Hp of the battery pack 100 on the safety of the battery pack 100, based on a test performed according to the standards of GB 38031-2020 Safety Requirements for Traction Batteries for Electric Vehicles. It can be seen from table 5 that when Hc/Hp is greater than 0.98, the structure of the box 10 occupies a small height of the battery pack 100, and the strength of the box 10 cannot meet the requirements, resulting in safety accidents such as fire and explosion. When 0.02 ≤ Hc/Hp, the structural strength of the box 10 can meet the requirements, and occurrence of fire and explosion is avoided. When Hc/Hp is less than 0.2, the structural strength of the box 10 can meet the requirements, but the battery pack 100 has low space utilization and excessively low energy density.

Further, when 0.5 ≤ Hc/Hp < 0.94, the strength of the battery pack 100 meets the requirements, safety accidents such as fire and explosion are avoided, the battery pack 100 has high space utilization, and the battery pack 100 has high energy density.

According to some embodiments of this application, the battery pack 100 includes a box 10 and a battery cell 20. The box 10 encloses an accommodating cavity s, and the battery cell 20 is accommodated in the accommodating cavity s, where the box 10 includes a bearing member 11a, the battery cell 20 is disposed at a surface of the bearing member 11a, and a minimum thickness H of the bearing member 11a and a weight M of the battery pack 100 satisfy 0.0002 mm/kg < H/M ≤ 0.2 mm/kg. In this case, the bearing member 11a is configured to bear the weight of the battery cell 20. When the thickness H of the bearing member 11a and the weight M of the battery pack 100 satisfy a condition of 0.0002 mm/kg < H/M ≤ 0.2 mm/kg, the battery pack 100 has good structural strength and avoids the problem of fire and explosion; and in addition, the battery pack 100 has high energy density and the battery pack 100 has higher endurance.

According to another aspect, this application further provides an electric apparatus. The electric apparatus includes the battery pack 100 provided in any one of the foregoing embodiments. The battery pack 100 is configured to supply electric energy to the electric apparatus. Introduction of the electric apparatus refers to the content of the foregoing description, which is not repeated herein.

The electric apparatus includes the foregoing battery pack 100 and therefore has all the beneficial effects in the foregoing embodiments. This is not repeated herein.

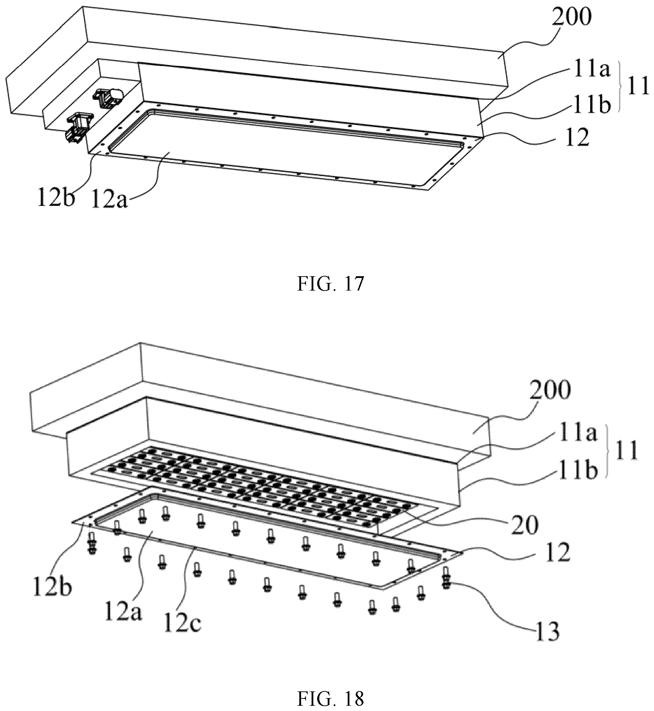

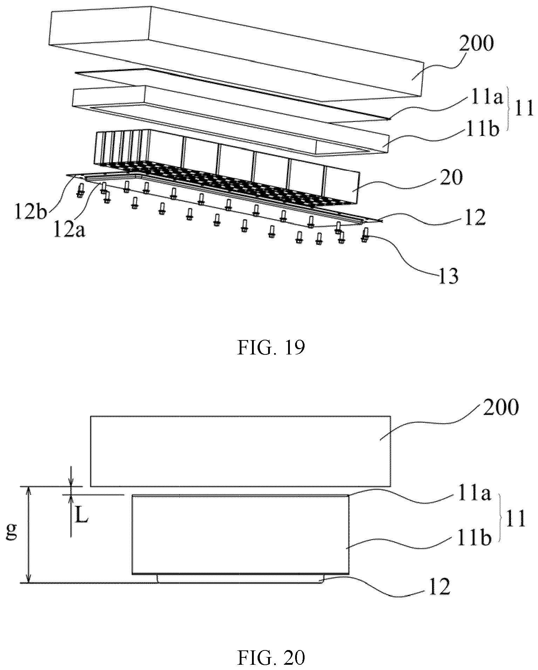

FIG. 17 is a schematic diagram of application of a battery pack 100 according to some embodiments of this application to a vehicle body 200. FIG. 18 is a first disassembled state view of the structure shown in FIG. 17. FIG. 19 is a second disassembled state view of the structure shown in FIG. 17.

In some embodiments, referring to FIG. 17 to FIG. 19, the electric apparatus includes a vehicle 1000. The battery pack 100 is disposed at the bottom of the vehicle body 200 of the vehicle 1000. Introduction of the vehicle 1000 refers to the content of the foregoing description, which is not repeated herein.

The vehicle body 200 of the vehicle 1000 refers to a portion of the vehicle 1000 for carrying passengers and cargoes, including a driving compartment, a passenger compartment, an engine compartment, a luggage compartment, and the like. The vehicle body 200 typically includes a vehicle body 200 housing 22 as well as vehicle doors, vehicle windows, decorative parts, seats, an air conditioning unit, and the like disposed on the vehicle body 200 housing 22. The vehicle body 200 housing 22 typically refers to a structure formed by main load-bearing members such as longitudinal beams, cross beams, chassis, and pillars of the vehicle 1000, along with sheet metal parts connected to the main load-bearing members. In the embodiments of this application, that the battery pack 100 is disposed at the bottom of the vehicle body 200 means that the battery pack 100 is disposed at the bottom of the vehicle body 200 housing 22.

In this case, the battery pack 100 is disposed at the bottom of the vehicle body 200 without occupying internal space of the vehicle body 200, helping to reduce volume and weight of the vehicle body 200.

FIG. 20 is a schematic diagram of a mounting relationship between a battery pack 100 and a vehicle body 200 according to some embodiments of this application. In some embodiments, referring to FIG. 20, the body 11 includes a bearing member 11a located at the top of the box 10; the bearing member 11a is configured to define the accommodating cavity s; and in the vertical direction, a distance L from the bearing member 11a to the vehicle body 200 satisfy L ≥ 0.

The battery pack 100 is located at the bottom of the vehicle body 200, while the bearing member 11a is located at the top of the box 10. Therefore, in the battery pack 100, the bearing member 11a is closest to the vehicle body 200. The distance L from the bearing member 11a to the vehicle body 200 refers to a distance from a highest position of the bearing member 11a to the vehicle body 200 located above the bearing member 11a in the vertical direction. When the bearing member 11a includes the bearing portion 11a1 and the connection portion 11a2, the distance L from the bearing member 11a to the vehicle body 200 refers to a distance from the outer surface of the bearing portion 11a1 facing away from the accommodating cavity s to the vehicle body 200 located above the bearing member 11a.

When the distance L from the bearing member 11a to the vehicle body 200 is equal to 0, the bearing member 11a abuts against the vehicle body 200. When the distance L from the bearing member 11a to the vehicle body 200 is greater than 0, the bearing member 11a and the vehicle body 200 are spaced apart without abutting against each other. Understandably, in this case, the bottom cover 12 is located at the bottom of the bearing member 11a, and a distance g from the bottom cover 12 to the vehicle body 200 is greater than 0.

When the battery pack 100 is disposed below the vehicle body 200, a range within a distance from the bottom of the battery pack 100 to the vehicle body 200 refers to a mounting space occupied by the battery pack 100. When the bearing member 11a and the vehicle body 200 are spaced apart, a certain useless space is present between the battery pack 100 and the vehicle body 200. If the bearing member 11a abuts against the vehicle body 200, the useless space between the battery pack 100 and the vehicle body 200 can be provided in a space range of the battery pack 100. In this way, under a condition that a same space is occupied below the vehicle body 200, that the battery pack 100 abuts against the vehicle body 200 can increase the volume of the battery pack 100, thereby increasing the electric quantity and energy density of the battery pack 100.

In this case, when the distance L from the bearing member 11a to the vehicle body 200 is equal to zero, the battery pack 100 can have a large electric quantity and high energy density, and the vehicle 1000 has high endurance. When the distance L from the bearing member 11a to the vehicle body 200 is greater than zero, the bearing member 11a is mounted more flexibly.

In some embodiments, referring to FIG. 17 and FIG. 19, the body 11 includes a bearing member 11a located at the top of the box 10; the bearing member 11a is configured to define the accommodating cavity s; and the battery pack 100 is mounted to the vehicle body 200 via the bearing member 11a.

The battery pack 100 is located at the bottom of the vehicle body 200, while the bearing member 11a is located at the top of the box 10. Therefore, in the battery pack 100, the bearing member 11a is closest to the vehicle body 200. The battery pack 100 is mounted to the vehicle body 200 via the bearing member 11a. Specifically, the bearing member 11a may be fixed to the vehicle body 200 via a fastener 13 (for example, a screw, a bolt, and a rivet), by welding, or the like.

When the battery cell 20 is disposed on the bearing member 11a, a structure formed by the battery cell 20 and the bearing member 11a is connected to the vehicle body 200, enhancing the strength of the top of the battery pack 100, thereby enhancing the mounting strength of the battery pack 100.

In some embodiments, the bearing member 11a is configured to constitute at least a part of a chassis of the vehicle body 200.

As a part of the vehicle body 200, the chassis is a combination of four parts including a transmission system, a driving system, a steering system, and a braking system, for supporting and mounting an engine as well as various components and assemblies of the vehicle 1000 so as to form an overall profile of the vehicle 1000, bearing the power of the engine, and ensuring normal driving.

The chassis is located at the bottom of the vehicle body 200, and the bearing member 11a directly serves as at least a part of the chassis. To be specific, the bearing member 11a is configured to constitute at least a part of the chassis of the vehicle body 200. In this way, the bearing member 11a and the chassis of the vehicle body 200 are integrated, such that space occupied by a gap between a traditional chassis and the battery pack 100 can be provided inside the battery pack 100 to increase the space of the battery pack 100, helping to increase energy of the battery pack 100, thereby improving endurance of the vehicle 1000.

According to some embodiments of this application, referring to FIG. 17 to FIG. 19, the electric apparatus includes a vehicle 1000. The battery pack 100 is disposed at the bottom of the vehicle body 200 of the vehicle 1000. The battery pack 100 includes a box 10 and a battery cell 20. The box 10 includes a bearing member 11a located at the top of the box 10. The battery cell 20 is located in the box 10 and suspended under the bearing member 11a, and an electrode terminal 21a of the battery cell 20 is located on an outer surface of the battery cell 20 facing away from the bearing member 11a. The bearing member 11a constitutes at least a part of the chassis of the vehicle 1000.

In this case, the battery cell 20 is suspended under the bearing member 11a to enhance the strength of the bearing member 11a, thereby enhancing the strength of the top of the battery cell 20, such that the bearing member 11a can meet a specified stress requirement as the chassis. In addition, the electrode terminal 21a of the battery cell 20 faces away from the bearing member 11a; the battery cell 20 can be directly mounted to the bearing member 11a, saving a gap between the battery cell 20 and the bearing member 11a; and the gap saved is used for increasing a mounting space for the battery cell 20, increasing energy of the battery pack 100, thereby improving the endurance of the vehicle 1000.

Technical features in the foregoing embodiments may be combined in any way. For brevity of description, not all possible combinations of the technical features in the foregoing embodiments are described. However, as long as there is no contradiction among combinations of these technical features, all the combinations should be considered within a range recorded in this specification.

The foregoing embodiments show merely several implementations of this application, and descriptions thereof are specific and detailed, but should not be construed as any limitation on the patent scope of this application. It should be noted that persons of ordinary skill in the art may further make several modifications and improvements without departing from the concept of this application, and all these modifications and improvements fall within the protection scope of this application. Therefore, the protection scope of the patent of this application should be subject to the appended claims.

## Claims

1. A battery pack, comprising:
a box, wherein the box encloses an accommodating cavity; and
a battery cell, accommodated in the accommodating cavity;
wherein the box comprises a bearing member; the battery cell is disposed at a surface of the bearing member; a minimum thickness H of the bearing member and a weight M of the battery pack satisfy 0.0002 mm/kg < H/M ≤ 0.2 mm/kg.

2. The battery pack according to claim 1, wherein the minimum thickness H of the bearing member satisfies 0.2 mm < H < 20 mm.

3. The battery pack according to claim 1 to 2, wherein the battery cell is suspended under the bearing member.

4. The battery pack according to claim 3, wherein an outer surface of the battery cell facing the bearing member is a first outer surface; the battery cell comprises an electrode terminal; and the electrode terminal is arranged on an outer surface other than the first outer surface of the battery cell.

5. The battery pack according to claim 4, wherein the battery cell has a second outer surface facing away from the first outer surface, and the electrode terminal is arranged on the second outer surface.

6. The battery pack according to any one of claims 1 to 5, wherein the battery cell is adhered to the bearing member.

7. The battery pack according to any one of claims 1 to 6, wherein the bearing member is located at the top of the box and is configured to define the accommodating cavity.

8. The battery pack according to claim 7, wherein the bearing member comprises a bearing portion and a connection portion; the connection portion is connected to an edge of the bearing portion in an enclosing manner; the bearing portion is configured to define the accommodating cavity; the connection portion is connected to a portion other than the bearing member of the box; and the battery cell is disposed at the bearing portion.

9. The battery pack according to claim 8, wherein the bearing portion protrudes in a direction away from the accommodating cavity with respect to the connection portion.

10. The battery pack according to claim 8, wherein the bearing portion and the connection portion have a same thickness.

11. The battery pack according to any one of claims 1 to 10, wherein the box further comprises a bottom cover located at the bottom of the box; the bottom cover is configured to define the accommodating cavity; and the bottom cover and the battery cell are spaced apart.

12. The battery pack according to any one of claims 1 to 10, wherein the box further comprises a frame and a bottom cover; the frame encloses a cavity with two ends through in a vertical direction; the bottom cover and the bearing member respectively cover two opposite ends of the cavity in the vertical direction; and the bottom cover, the frame, and the bearing member jointly enclose the accommodating cavity.

13. The battery pack according to claim 12, wherein the bearing member and the frame are fixedly connected or integrally formed.

14. An electric apparatus, comprising the battery pack according to any one of claims 1 to 13, wherein the battery pack is configured to supply electric energy to the electric apparatus.

15. The electric apparatus according to claim 14, wherein the electric apparatus comprises a vehicle, and the battery pack is disposed at the bottom of a vehicle body of the vehicle.

16. The electric apparatus according to claim 15, wherein the bearing member is located at the top of the box; and in the vertical direction, a distance L from the bearing member to the vehicle body satisfies L ≥ 0.

17. The battery pack according to claim 15 or 16, wherein the battery pack is mounted to the vehicle body via the bearing member.

18. The electric apparatus according to claim 17, wherein the bearing member is configured to constitute at least a part of a chassis of the vehicle body.
